# EUROPÄISCHE PATENTSCHRIFT

(11) **EP 3 563 093 B1**
(45) Veröffentlichungstag und Bekanntmachung des Hinweises auf die Patenterteilung: **30.06.2021**
(21) Anmeldenummer: 17835852.9
(22) Anmeldetag: 22.12.2017
(51) Int. Cl.: F24D 13/02, H05B 3/22

(54) **HEIZSYSTEM, KIT ZUM HERSTELLEN EINES HEIZSYSTEMS UND VERFAHREN ZU DEREN VERWENDUNG**
HEATING SYSTEM, KIT FOR PRODUCING A HEATING SYSTEM, AND METHOD FOR USE THEREOF
SYSTÈME DE CHAUFFAGE, KIT DE FABRICATION D'UN SYSTÈME DE CHAUFFAGE ET PROCÉDÉ PERMETTANT LEUR UTILISATION

(30) Priorität: 27.12.2016 DE 102016125742
(43) Veröffentlichungstag der Anmeldung: 06.11.2019
(73) Patentinhaber: Future Carbon GmbH, 95448 Bayreuth (DE); Furtmayr, Christian, 83132 Pittenhart / Oberbrunn (DE)
(72) Erfinder: FURTMAYR, Christian, 83132 Pittenhart / Oberbrunn (DE); KANDZIORA, Thomas, 86899 Landsberg (DE); ZEYN, Klaus, 80639 München (DE); FORERO, Stefan, 95466 Weidenberg (DE); SCHÜTZ, Walter, 95466 Weidenberg (DE)
(74) Vertreter: Müller, Christian Stefan Gerd
(86) Internationale Anmeldenummer: PCT/EP2017/084447
(87) Internationale Veröffentlichungsnummer: WO 2018/122182

(56) Entgegenhaltungen:
- WO-A1-2008/105612
- CA-A1- 2 899 422
- DE-A1-102007 041 767
- US-A1- 2011 081 135

## Beschreibung

### Gebiet der Erfindung

Die vorliegende Erfindung betrifft ein Heizsystem, das insbesondere dazu geeignet ist, einen Raum, wie einen Raum eines Hauses, zu beheizen, sowie ein Kit zum Herstellen eines Heizsystems an einer Wand. Außerdem betrifft die Erfindung Verwendungen der erfindungsgemäßen Gegenstände, insbesondere zum Beheizen eines Raumes bzw. zur Herstellung eines Heizsystems, sowie entsprechende Verfahren.

### Hintergrund

Die Beheizung der Oberfläche eines Objektes oder Körpers ist in vielen Lebenslagen erforderlich, wobei bei der Beheizung von Räumen vielerorts elektrische Wandheizvorrichtungen, die beispielsweise mäanderförmige Heizdrähte aufweisen, oder wassergestützte Wandheizvorrichtungen, in denen erwärmtes Wasser zirkuliert, eingesetzt werden können. Gemein ist diesen Heizvorrichtungen, dass sie Wandoberflächen auf eine gewünschte Temperatur erwärmen, wobei, da diese erwärmten Wände mit den übrigen mobilen und immobilen Gegenständen des Raumes (wie Möbel, Luft, Decke, Fußboden und Wände, an denen keine Wandheizvorrichtung befestigt ist) im Temperaturaustausch stehen, diese übrigen mobilen und immobilen Gegenstände des Raumes schlussendlich die gleiche Temperatur wie die erwärmten Wände aufweisen.

Nachteile dieser Art der Beheizung bestehen darin, dass ein relativ großer Anteil der Energie aufgewendet werden muss, zuerst die Wand zu erwärmen, und dass trotz Dämmung relativ viel Wärmeenergie in die Wand verlagert wird, da die Dämmung relativ schnell das Temperaturniveau der beheizten Wandfläche erreicht.

Um diese Probleme zu umgehen, sind auch Wandheizvorrichtungen bekannt, die eine Platte aufweisen, auf der Flächenheizleitungen montiert sind und auf deren Rückseite eine hochglänzende Aluminiumfolie aufgeklebt ist, wobei die Platte mittels einer Unterkonstruktion aus Holzlatten auf Wände derart montiert wird, dass die Rückseite der Platte zur Wand zeigt und zwischen der Platte und der Wand ein Luftspalt in der Stärke der Holzlatten entsteht; vgl. DE 20 2016 001 732 U1. Es ist in der DE 20 2016 001 732 U1 beschrieben, dass durch diesen Aufbau es möglich wäre, die nach außen gerichtete Wärmestrahlung wirkungsvoll zu vermindern. Jedoch müsste, damit der Wärmeverlust über die Wand bei dieser Konstruktion tatsächlich wirkungsvoll vermindert wird, der Luftspalt vom Rest des zu beheizenden Raumes derart abgetrennt sein, dass kein Wärmeaustausch zwischen dem Luftspalt und z.B. der übrigen Raumluft stattfinden kann. Eine solche hermetische Abdichtung eines solchen Luftspaltes ist allerdings praktisch kaum durchführbar. Die Patentanmeldung DE102007041767 A1 zeigt eine Einmannplatte mit einer elektrischen Widerstandsheizung zum Beheizen von Gebäuden. Aus der Patentanmeldung CA2899422 A1 ist ein IR-Heizelement bekannt.

### Zusammenfassung der Erfindung

Aufgabe der vorliegenden Erfindung ist somit, ein Heizsystem bereitzustellen, das einfach an einer Wand eines Raumes angebracht werden kann und das effizienter die Energie zum Beheizen des Raumes nutzt als die bisherigen Wandheizvorrichtungen.

Diese Aufgabe wird erfindungsgemäß durch die in den Patentansprüchen beschriebenen Gegenstände gelöst. Insbesondere haben die Erfinder der vorliegenden Erfindung überraschenderweise herausgefunden, dass man durch eine Kombination mehrerer Maßnahmen, nämlich thermische Isolation einer Wand mittels einer Isolationsschicht, gleichzeitige Beheizung der Isolationsschicht und Anbringen einer Reflexionsschicht an die Wand, sowohl eine thermische Entkopplung und somit eine erhebliche Verbesserung der Isolation der Wand als auch eine erhöhte Heizeffizienz erzielen kann.

Insbesondere betrifft die Erfindung in einem ersten Aspekt ein Heizsystem zum Beheizen eines Raumes nach Anspruch 1.

In einem zweiten Aspekt wird erfindungsgemäß ein Kit zum Herstellen eines Heizsystems an einer Wand bereitgestellt, welches in Anspruch 2 definiert wird.

In einem dritten Aspekt wird nach Anspruch 12 eine Verwendung eines erfindungsgemäßen Heizsystems zum Beheizen eines Raumes oder zum Abschirmen des Raumes vor elektromagnetischer Strahlung bereitgestellt.

In einem vierten Aspekt wird nach Anspruch 13 eine Verwendung eines erfindungsgemäßen Kits zur Herstellung eines Heizsystems an einer Wand bereitgestellt.

In einem fünften Aspekt wird nach Anspruch 14 ein Verfahren zur Herstellung eines Heizsystems an einer Wand bereitgestellt.

In einem sechsten Aspekt wird nach Anspruch 15 ein Verfahren zum Beheizen eines Raumes bereitgestellt.

### Heizsystem

### Heizelement

Eine in dem erfindungsgemäßen Heizsystem enthaltene Komponente ist das Heizelement. Prinzipiell ist für das erfindungsgemäße Heizsystem ein jegliches Heizelement einsetzbar, sofern es in der Lage ist, IR-Strahlung zu erzeugen, durch die ein Raum beheizt werden kann. Beispielhafte Heizelemente beinhalten wasser- oder ölgestützte Elemente, bei denen erwärmtes Wasser bzw. Öl durch Leitungen innerhalb des Heizelements fließt, sowie elektrische Heizelemente, z.B. solche, die einen oder mehrere mäanderförmige Heizdrähte aufweisen oder die eine Heizschicht aufweisen, die vorzugsweise mindestens ein auf Kohlenstoff basierendes Leitfähigkeitsadditiv enthält, insbesondere elektrische Heizelemente, die mit einer Schutzkleinspannung betreibbar sind. Vorteilhafterweise ist das Heizelement des erfindungsgemäßen Heizsystems ein elektrisches Heizelement, insbesondere ein elektrisches Heizelement, das mit einer Schutzkleinspannung betreibbar ist.

In einer bevorzugten Ausführungsform umfasst ein Heizelement eine Heizschicht, die derart ausgestattet ist, IR-Strahlung zu erzeugen, und ein Substrat, auf dem die Heizschicht aufgebracht ist. Somit kann die Heizschicht bei wasser- oder ölgestützten Heizelementen entsprechende Leitungen (insbesondere Rohre), in denen erwärmtes Wasser bzw. Öl fließt, umfassen, während bei elektrischen Heizelementen die Heizschicht Heizdrähte oder mindestens ein auf Kohlenstoff basierendes Leitfähigkeitsadditiv umfassen kann. In einer bevorzugten Ausführungsform ist die Heizschicht nur auf einer der beiden Hauptseiten des Substrates aufgebracht (Hauptseiten sind in diesem Zusammenhang diejenigen beiden Seiten, die die größten Flächen aufspannen (also die Seiten, die von der Länge und Breite des Substrates definiert werden)). In dieser Ausführungsform wird diese Hauptseite des Substrates, auf der die Heizschicht aufgebracht ist, als erste Seite des Substrates bzw. Heizelements bezeichnet. Diejenige Seite des Substrates (bzw. Heizelements), die der ersten Seite des Substrates (bzw. Heizelements) gegenüber liegt, wird als zweite Seite bezeichnet. In einer alternativen Ausführungsform ist auf jede der beiden Hauptseiten des Substrates eine Heizschicht aufgebracht, die derart ausgestattet ist, IR-Strahlung zu erzeugen.

Vorzugsweise ist das Heizelement derart ausgestattet, IR-Strahlung in jede Richtung abzugeben (d.h. es weist keine Aluminiumfolie, insbesondere keine Reflexionsschicht, durch die IR-Strahlung reflektierbar ist oder reflektiert wird, insbesondere keine IR-Reflexionsschicht, auf).

Die Wärme ist bei der Heizschicht eines elektrischen Heizelements durch Strombeaufschlagung erzeugbar. In der bevorzugten Ausführungsform, in der die Heizschicht ein oder mehrere Leitfähigkeitsadditive enthält, ist die Heizschicht aufgrund des Vorhandenseins des einen oder der mehreren Leitfähigkeitsadditive niederohmig, was zu einer guten elektrischen Leitfähigkeit führt, da nur ein geringer elektrischer Widerstand vorhanden ist. Dadurch kann eine homogene Beheizbarkeit realisiert werden. Durch die Niederohmigkeit ist zudem gewährleistet, dass an die Heizschicht nur geringe Spannungen und/oder geringe Ströme angelegt werden müssen, um eine gute Beheizung zu erreichen.

Um an die Heizschicht, insbesondere die Heizschicht, die mindestens ein auf Kohlenstoff basierendes Leitfähigkeitsadditiv enthält, eines elektrischen Heizelements Spannung und/oder Strom anlegen zu können, weist das Heizelement vorzugsweise zwei elektrisch leitfähige Kontaktelemente auf. Der Anschluss der Kontaktelemente an eine Spannungsquelle ist gemäß geltenden Normen und Bestimmungen durchzuführen, die dem Fachmann bekannt sind.

Die Heizschicht ist auf dem Substrat in an sich bekannter Weise aufgebracht, beispielsweise mittels entsprechender Klemmen für Leitungen im Fall von wasser- oder ölgestützten Heizelementen bzw. als, insbesondere folienartige, Beschichtung im Fall einer Heizschicht, die mindestens ein auf Kohlenstoff basierendes Leitfähigkeitsadditiv umfasst.

Bei einem elektrischen Heizelement, insbesondere bei dem bevorzugten elektrischen Heizelement, das einen Heizschicht umfasst, die mindestens ein auf Kohlenstoff basierendes Leitfähigkeitsadditiv enthält, ist die Heizschicht vorzugsweise nur auf einer der beiden Hauptseiten des Substrates als Beschichtung aufgebracht (Hauptseiten sind in diesem Zusammenhang diejenigen beiden Seiten, die die größten Flächen aufspannen (also die Seiten, die von der Länge und Breite des Substrates definiert werden)). Die Heizschicht kann auf ein Substrat in an sich bekannter Weise aufgebracht werden. Z.B. kann eine Dispersion, die das mindestens eine auf Kohlenstoff basierende Leitfähigkeitsadditiv enthält, durch Rollen, Sprühen, Streichen, Pinseln, Rakeln, Spachteln oder Drucken auf das Substrat aufgetragen werden, wobei Sprühen, Rollen, Rakeln oder Drucken bevorzugt ist. Der Auftrag der Dispersion kann in einem Schritt (d.h. in nur einem Anstrich) oder in zwei oder mehreren Schritten (d.h. in 2 oder mehreren Anstrichen) erfolgen, wobei im letzteren Fall zwischen den einzelnen Auftragungen jeweils ein Trocknungsschritt liegen sollte. Vorzugsweise ist die Heizschicht mittels Rollen in zwei Anstrichen (mit einem Trocknungsschritt dazwischen) oder mittels Aufsprühen in einem Anstrich erzeugbar. Gegebenenfalls kann vor dem Auftragen der Heizschicht eine Grundierschicht auf dem Substrat erzeugt werden. Dies ist insbesondere vorteilhaft, um die Saugfähigkeit des Substrates zu verringern und/oder eine gleichbleibende Oberflächenqualität des Substrates sicherzustellen. Somit kann in einer Ausführungsform das Heizelement, insbesondere das elektrische Heizelement, wie ein Heizelement, das eine Heizschicht aufweist, die mindestens ein auf Kohlenstoff basierende Leitfähigkeitsadditiv enthält, zwischen der Heizschicht und dem Substrat eine Grundierschicht aufweisen.

Auf der Heizschicht können eine oder mehrere weitere Schichten (wie eine Ausgleichsschicht zum Ausgleich von Unebenheiten und/oder eine Schutzschicht (z.B. ein Schutzlack) und/oder eine Farbschicht) aufgebracht sein. Die Schutz- bzw. Ausgleichsschicht kann in einer Ausführungsform die Heizschicht elektrisch isolieren. Die Schutz- bzw. Ausgleichsschicht kann in an sich bekannter Weise erzeugt werden. Beispiele für eine solche Schutz- bzw. Ausgleichsschicht sind eine Schicht aus Spachtelmasse oder Putz, eine Schicht aus Sperrgrund, ein Vliesband, das in einer Ausführungsform aufklebbar ist, oder eine Kombination davon. Vorteilhafterweise ist die Schutz- bzw. Ausgleichsschicht thermisch leitend, gegebenenfalls auch elektrisch isolierend. Weiterhin kann eine Farbschicht als oberste Schicht aufgetragen werden oder sein, die vorteilhafterweise thermisch leitend ist.

Die Heizschicht, insbesondere die Heizschicht eines elektrischen Heizelements, wie die Heizschicht, die mindestens ein auf Kohlenstoff basierendes Leitfähigkeitsadditiv enthält, kann vollflächig auf einer Seite des Substrates aufgebracht sein. Vorteilhafterweise bedeckt die Heizschicht jedoch nicht vollflächig eine Seite des Substrates, sondern ist nur auf einer Teilfläche (z.B. bis zu 95%, bis zu 90%, bis zu 85%, bis zu 80%, bis zu 75% oder bis zu 70%) des Substrates aufgebracht, wobei die Teilfläche vorzugsweise derart angeordnet ist, dass ein umlaufender Rand des Substrates frei von der Heizschicht (insbesondere frei von der Heizschicht und Kontaktelementen) bleibt. Dies ist vorteilhaft, da dieser Rand zur Montage des Heizelements auf das Abstandselement genutzt werden kann. Der Rand kann beispielweise eine Breite von 1 bis 20 cm (wie 2 bis 15 cm, 3 bis 12 cm, 4 bis 10 cm oder 5 bis 8 cm) aufweisen.

Die Fläche, die die Heizschicht auf dem Substrat bedeckt, ist nicht begrenzt, außer durch die Ausmaße des jeweiligen Substrates. Die Fläche der Heizschicht kann, sofern das Substrat entsprechende Ausmaße aufweist, beispielsweise bis zu 100 m², vorzugsweise bis zu 20 m², mehr bevorzugt bis zu 10 m², wie 1 dm² bis 50 m², 0,1 m² bis 10 m², 0,2 m² bis 8 m², 0,3 m² bis 6 m², 0,4 m² bis 4 m², 0,5 m² bis 2 m² oder 0,6 m² bis 1,10 m², betragen.

In Draufsicht (d.h. in Blickrichtung des Lotes auf die Fläche, die von der Länge und Breite der Heizschicht aufgespannt wird) kann die Heizschicht jede beliebige zweidimensionale Form aufweisen, z.B. rechteckig, quadratisch, kreisförmig, ellipsoid, in Form eine Parallelogramms, etc. Gemäß einer bevorzugten Ausführungsform weist die Heizschicht, insbesondere die Heizschicht eines elektrischen Heizelements, wie die Heizschicht, die mindestens ein auf Kohlenstoff basierendes Leitfähigkeitsadditiv enthält, in Draufsicht eine viereckige Form, insbesondere die Form eines Rechtecks oder Parallelogramms, auf. Vorzugsweise ist das Breiten-zu-Längen-Verhältnis der Heizschicht, insbesondere der Heizschicht eines elektrischen Heizelements, wie der Heizschicht, die mindestens ein auf Kohlenstoff basierendes Leitfähigkeitsadditiv enthält, kleiner gleich 1. Bei dieser Ausführungsform weist die Heizschicht somit eine Band- oder Streifenform auf.

Zur Beaufschlagung des elektrischen Heizelements, insbesondere der Heizschicht, mit elektrischer Spannung und/oder elektrischem Strom weist das Heizelement vorzugsweise zwei elektrisch leitfähige Kontaktelemente (insbesondere für jedes in dem erfindungsgemäßen Heizsystem enthaltene elektrische Heizelement bzw. für jede in dem erfindungsgemäßen Heizsystem enthaltene Heizschicht) auf. Die Kontaktelemente können insbesondere Kontaktstreifen oder Kontaktbänder darstellen.

In einer Ausführungsform umfassen die zwei elektrisch leitfähigen Kontaktelemente elektrisch leitfähige Metallstreifen, insbesondere elektrisch leitfähige Kupferstreifen. Vorteilhafterweise weist jedes Kontaktelement eine Klebschicht auf. Die Gesamtdicke jedes Kontaktelements (inkl. Klebschicht, falls vorhanden) kann vorzugsweise maximal 100 µm, mehr bevorzugt maximal 90 µm, mehr bevorzugt maximal 80 µm, mehr bevorzugt maximal 75 µm betragen.

Die Kontaktelemente können in einer Ausführungsform als gerade Streifen ausgebildet sein. Allerdings ist die Form der Kontaktelemente auch für weitere Ausführungsformen nicht auf eine solche gerade Konfiguration beschränkt. Die Kontaktelemente können beispielsweise durch Streifen gebildet werden, die in der Hautausdehnungsrichtung der Heizschicht kurvenförmig verläuft.

In einer Ausführungsform sind die zwei elektrisch leitfähigen Kontaktelemente an sich gegenüberliegenden Randbereichen der Heizschicht (z.B. der obere und untere Randbereich oder der linke und rechte Randbereich) anordbar oder angeordnet. In einer Ausführungsform sind die zwei elektrisch leitfähigen Kontaktelemente parallel zueinander angeordnet oder anordbar.

Für die bevorzugte Ausführungsform, bei der die Heizschicht mindestens ein auf Kohlenstoff basierendes Leitfähigkeitsadditiv enthält, befinden sich dabei die Kontaktelemente an den seitlichen Randbereichen der Heizschicht, das heißt, sie erstrecken sich in Längsrichtung der bandförmigen Heizschicht. Diese Ausführungsform weist den Vorteil auf, dass zum einen der Abstand zwischen den Kontaktelementen verhältnismäßig gering ist und damit eine zuverlässige Erwärmung der Heizschicht über die Breite gewährleistet werden kann. Die Randbereiche der Heizschicht, insbesondere der Heizschicht eines elektrischen Heizelements, wie der Heizschicht, die mindestens ein auf Kohlenstoff basierendes Leitfähigkeitsadditiv enthält, stellen bevorzugt seitliche Randbereiche der Breite der Heizschicht dar. Als Breite wird in diesem Zusammenhang vorzugsweise eine Abmessung bezeichnet, die zu der Hauptausdehnungsrichtung, insbesondere Länge, der Heizschicht quer liegt. Die Randbereiche erstrecken sich jeweils von dem seitlichen Rand der Heizschicht und enden in einem Abstand zu der Mittellinie der Heizschicht, die in der Hauptausdehnungsrichtung liegt. Die Hauptausdehnungsrichtung kann hierbei eine Gerade oder eine Kurve sein. Die Kontaktelemente erstrecken sich somit nicht über die Mittellinie und enden vorzugsweise in einem Abstand zu der Mittellinie, wobei der Abstand vorteilhafterweise mindestens das 4-Fache (wie mindestens das 5-Fache, mindestens das 6-Fache, mindestens das 7-Fache oder mindestens das 8-Fache) der Breite eines Kontaktelements ist. Vorteilhafterweise kann der Abstand zwischen den Innenkanten der Kontaktelemente, sofern das Substrat entsprechende Ausmaße aufweist, bis zu 2 m, vorzugsweise bis zu 1 m, wie 30 bis 80 cm, 35 bis 70 cm oder 40 bis 60 cm betragen.

Die Breite der Kontaktelemente ist nicht kritisch. Jedoch sollten die Kontaktelemente derart dimensioniert sein, dass sie eine Beaufschlagung der Heizschicht mit elektrischer Spannung und/oder elektrischem Strom, vorzugsweise über die gesamte Länge und/oder Breite der Heizschicht erlauben. Beispielsweise kann die Breite der Kontaktelemente in Bezug zur Breite der Heizschicht ausgewählt werden. Eine geeignete Breite der Kontaktelemente kann im Bereich von 1/10 bis 1/40 (vorzugsweise 1/12 bis 1/32, wie 1/16 bis 1/24, wie ein 1/20) der Breite der Heizschicht betragen. Die absolute Breite der Kontaktelemente kann im Bereich von 2 bis 8 cm (vorzugsweise 2,5 bis 6,5 cm, wie 3,5 bis 5 cm oder 4 cm) liegen, wobei die Summe der Breiten der Kontaktelemente einer Heizschicht maximal die Hälfte der Breite der Heizschicht betragen sollte.

Die elektrisch leitenden Kontaktelemente erstrecken sich vorzugsweise über die gesamte Länge der Heizschicht. Dies weist den Vorteil auf, dass die Heizschicht auf ihrer gesamten Länge über ihre Breite von Strom durchflossen werden kann und damit die zu beheizende Fläche maximiert wird. Vorteilhafterweise können sich die Kontaktelemente über ein Längsende der Heizschicht hinaus erstrecken, das heißt über ein Längsende überstehen. Dies trägt ebenfalls zur Maximierung der zu beheizenden Fläche bei, da kein Abschnitt der Kontaktelemente, der im direkten Kontakt mit der Heizschicht steht, sondern lediglich der überstehende Rest der Kontaktelemente, der nicht im direkten Kontakt mit der Heizschicht steht, dazu verwendet werden kann bzw. verwendbar ist, um eine elektrisch leitende Verbindung (via einem elektrischen Anschluss und einer elektrischer Leitung) mit der Spannungsquelle sicherzustellen. Der elektrische Anschluss kann hierbei jeder Anschluss sein, der geeignet ist, ein Kontaktelement mit einer elektrischen Leitung elektrisch leitend zu verbinden. Solche elektrischen Anschlüsse sind dem Fachmann bekannt und beinhalten beispielsweise eine Steck- oder Lötverbindung, wobei die Lötverbindung gegebenenfalls zusätzlich eine Verklebung (z.B. mit einem Harzkleber oder Ähnlichem) aufweisen kann. Vorzugsweise kann der elektrische Anschluss eine Sicherungsmutter (wie eine Einschlagmutter), eine entsprechende Schraube sowie einen Kabelschuh umfassen. Die Sicherungsmutter ist vorzugsweise derart ausgestattet, dass, wenn sie mittels der Schraube auf der Seite des Substrates, auf der das Kontaktelement angebracht ist, und in dem Bereich, in dem das Kontaktelement angebracht ist, gegen den Kabelschuh, der zwischen der Sicherungsmutter und dem Kontaktelement angebracht ist, gedrückt wird, eine elektrisch leitende Verbindung zwischen dem Kontaktelement und dem Kabelschuh erzeugbar ist oder erzeugt wird. An dem Kabelschuh kann dann eine elektrische Leitung konventionell angeschlossen werden, mittels derer eine elektrisch leitende Verbindung zu der Spannungsquelle erzeugbar ist oder erzeugt wird. In einer alternativen Ausführungsform des elektrischen Anschlusses zwischen einem Kontaktelement und einer elektrischen Leitung, die elektrisch leitend mit der Spannungsquelle verbunden ist, weist das Substrat ein Loch auf, in das das Kontaktelement einklebbar oder eingeklebt ist. Danach wird ein Niet eingepresst (auch mit Gewinde möglich), eine Schraube montiert (gegebenenfalls eine Unterlegscheibe zur sicheren elektrischen Kontaktierung installiert) sowie ein Kabelschuh aufgesetzt, um eine elektrische Verbindung mit der elektrischen Leitung, die elektrisch leitend mit der Spannungsquelle verbunden ist, zu erzeugen. Eine Sicherungsmutter verpresst den Aufbau (gegebenenfalls inkl. einer Sicherungsscheibe). Danach kann der Aufbau auf Schraubenkopfseite mit einer oder mehreren weiteren Schichten (wie Spachtelmasse, Tapete und/oder Farbschicht) versehen werden.

Die Kontaktelemente können auf jegliche bekannte Weise auf dem Substrat angebracht werden, z.B. mittels Aufkleben (wie mit einer Klebschicht oder einem Klebstreifen), thermischen Spritzen (wie Lichtbogenspritzen) oder Plasmaspritzen. Das Anbringen von Kontaktelementen, insbesondere von elektrisch leitfähigen Metallstreifen, wie Kupferstreifen, ist dem Fachmann bekannt; vgl. z.B. WO 2013/156162. Für eine einfache Handhabung und Herstellung des Heizelements kann ein Aufkleben der Kontaktelemente auf dem Substrat bevorzugt sein. Für diese Ausführungsform weisen die Kontaktelemente vorzugsweise eine Klebschicht auf.

Die Kontaktelemente können nach der Erzeugung der Heizschicht auf dem Substrat (wobei auf dem Substrat gegebenenfalls zuvor eine Grundierschicht erzeugt wurde) auf diese Heizschicht aufgebracht werden. In diesem Fall ist es bevorzugt, dass die Aufbringung der Kontaktelemente unter Verwendung geeigneter Mittel erfolgt, die einen, insbesondere ungehinderten, Stromfluss zwischen den Kontaktelementen und der Heizschicht erlauben. Dies kann z.B. dadurch erreicht werden, dass in der Ausführungsform, in der die Kontaktelemente eine Klebschicht umfassen, diese Klebschicht elektrisch leitend ist. Alternativ können die Kontaktelemente vor Erzeugung der Heizschicht auf dem Substrat aufgebracht werden (gegebenenfalls kann zuvor eine Grundierschicht auf dem Substrat erzeugt werden). In diesem Fall ist es bevorzugt, dass eine Dispersion, die das mindestens eine auf Kohlenstoff basierende Leitfähigkeitsadditiv enthält, (evtl. zunächst nur) auf die Kontaktelemente aufgetragen wird, beispielsweise um die Auftragung von weiteren Schichten der Dispersion auf die Kontaktelemente und das Substrat (zur Erzeugung der Heizschicht) und/oder den Stromfluss zwischen den Kontaktelementen und der Heizschicht zu verbessern. Vorzugsweise wird die Dispersion nicht nur zwischen und auf den Kontaktelementen (die wie vorstehend beschrieben mit der Dispersion vorgestrichen sein können) aufgetragen, sondern auch über die andere Längsseite der Kontaktelemente hinaus (d.h. über diejenigen Längsseiten der Kontaktelemente hinaus, die nicht den Zwischenraum zwischen den Kontaktelementen definieren) und/oder über die Breitseite der Kontaktelemente hinaus auf dem Substrat (oder das zuvor grundierte Substrat). Dies führt dazu, dass die Kontaktelemente längsseits und/oder an der Breitseite der Kontaktelemente vollständig von der Heizschicht umschlossen sind. Vor der ersten Auftragung der Dispersion auf die Kontaktelemente kann es vorteilhaft sein, die Kontaktelemente zu entfetten, um die Anhaftung der Heizschicht an die Kontaktelemente zu verbessern.

Die Schichtdicke der Heizschicht, insbesondere der elektrischen Heizschicht wie der Heizschicht, die mindestens ein auf Kohlenstoff basierendes Leitfähigkeitsadditiv enthält, wird vorzugsweise gering gewählt und liegt beispielsweise für eine elektrische Heizschicht im µm-Bereich (z.B. im Bereich von 40 bis 200 µm, bevorzugt 50 bis 100 µm). Beispielsweise kann eine Schichtdicke der elektrischen Heizschicht, insbesondere der Heizschicht, die mindestens ein auf Kohlenstoff basierendes Leitfähigkeitsadditiv enthält, von weniger als 100 µm ausreichen, um die gewünschte Heizwirkung zu erlangen.

Das Substrat kann ein jegliches für den Baubereich geeignete Substrat sein (z.B. eine Gipsplatte, insbesondere eine Gipsfaserplatte), das vorzugsweise brandhemmend ausgestattet ist. Die Ausmaße und Form des Substrats und somit des Heizelements können herkömmlich sein. In Draufsicht (d.h. in Blickrichtung des Lotes auf die Fläche, die von der Länge und Breite des Substrates aufgespannt wird) kann das Substrat jede beliebige zweidimensionale Form aufweisen, z.B. rechteckig, quadratisch, kreisförmig, ellipsoid, in Form eine Parallelogramms, etc. Gemäß einer bevorzugten Ausführungsform weist das Substrat in Draufsicht eine viereckige Form, insbesondere die Form eines Rechtecks oder Parallelogramms, auf. Vorzugsweise ist das Breiten-zu-Längen-Verhältnis des Substrates kleiner gleich 1. Bei dieser Ausführungsform weist das Substrat somit eine Band- oder Streifenform auf.

Vorzugsweise liegen die Länge (L), Breite (B) und Dicke (D) des Substrates/Heizelements in den nachstehenden Bereichen: L: 10 bis 500 cm (wie 50 bis 400 cm, 80 bis 300 cm, 100 bis 250 cm oder 120 bis 200 cm); B: 10 bis 200 cm (wie 20 bis 150 cm, 30 bis 140 cm, 40 bis 120 cm, 50 bis 100 cm oder 60 bis 80 cm); D: 5 bis 40 mm (wie 10 bis 30 mm oder 15 bis 25 mm). Die Ausmaße, insbesondere die Dicke des Substrates/Heizelements können auch je nach verwendetem Heiztyp variieren, wobei bei den wasser- oder ölgestützten Systemen aufgrund der notwendigen Leitungen eher größere Dicken (z.B. mindestens 12 mm) bevorzugt sind, während für elektrisch betriebene Heizsysteme geringere Dicken auch verwendbar sind.

Anstatt eines einzigen großflächigen Substrates/Heizelements (z.B. um die Wand eines Raumes vollflächig mit einem einzigen Heizelement zu versehen) ist es bevorzugt, mehrere (wie mindestens 2, mindestens 3, mindestens 4, mindestens 5, mindestens 6, mindestens 7, mindestens 8, mindestens 9, mindestens 10, z.B. bis zu 40, bis zu 30, bis zu 25, bis zu 20, bis zu 15 oder bis zu 10, wie 2 bis 40, 3 bis 30 4 bis 25, 5 bis 20, 6 bis 15 oder 2 bis 10) entsprechend kleinere Substrate/Heizelemente zu verwenden, die insgesamt die Wand vollständig abdecken können. Das erfindungsgemäße Heizsystem kann daher mindestens 1, wie mindestens 2, mindestens 3, mindestens 4, mindestens 5, mindestens 6, mindestens 7, mindestens 8, mindestens 9, mindestens 10, z.B. bis zu 40, bis zu 30, bis zu 25, bis zu 20, bis zu 15 oder bis zu 10, wie 2 bis 40, 3 bis 30 4 bis 25, 5 bis 20, 6 bis 15 oder 2 bis 10, Heizelemente, insbesondere elektrische Heizelemente, wie Heizelemente, die eine Heizschicht aufweisen, die mindestens ein auf Kohlenstoff basierendes Leitfähigkeitsadditiv enthält, wobei vorzugsweise jedes elektrische Heizelement zwei elektrisch leitfähige Kontaktelemente aufweist. Die Fläche der einzelnen Heizschichten kann gleich oder verschieden sein und kann jeweils im vorstehend angegeben Bereich (beispielsweise 1 dm² bis 50 m², 0,1 m² bis 10 m², 0,2 m² bis 8 m², 0,3 m² bis 6 m², 0,4 m² bis 4 m², 0,5 m² bis 2 m² oder 0,6 m² bis 1,10 m²) liegen.

Alternativ kann auf einem Substrat anstatt einer einzigen Heizschicht mehrere (wie mindestens 2, mindestens 3, mindestens 4, mindestens 5, mindestens 6, mindestens 7, mindestens 8, mindestens 9, mindestens 10, z.B. bis zu 40, bis zu 30, bis zu 25, bis zu 20, bis zu 15 oder bis zu 10, wie 2 bis 40, 3 bis 30 4 bis 25, 5 bis 20, 6 bis 15 oder 2 bis 10) entsprechend kleinere Heizschichten aufgebracht sein. Das erfindungsgemäße Heizsystem kann daher mindestens 1, wie mindestens 2, mindestens 3, mindestens 4, mindestens 5, mindestens 6, mindestens 7, mindestens 8, mindestens 9, mindestens 10, z.B. bis zu 40, bis zu 30, bis zu 25, bis zu 20, bis zu 15 oder bis zu 10, wie 2 bis 40, 3 bis 30 4 bis 25, 5 bis 20, 6 bis 15 oder 2 bis 10, Heizschichten, insbesondere Heizschichten, die jeweils mindestens ein auf Kohlenstoff basierendes Leitfähigkeitsadditiv enthalten, auf einem Substrat aufweisen, wobei vorzugsweise jede Heizschicht zwei elektrisch leitfähige Kontaktelemente aufweist. Die Fläche der einzelnen Heizschichten kann gleich oder verschieden sein und kann jeweils im vorstehend angegeben Bereich (beispielsweise 1 dm² bis 50 m², 0,1 m² bis 10 m², 0,2 m² bis 8 m², 0,3 m² bis 6 m², 0,4 m² bis 4 m², 0,5 m² bis 2 m² oder 0,6 m² bis 1,10 m²) liegen.

Beispielsweise kann an eine Wand eines Raumes, die 300 cm hoch und 500 cm lang ist und vollständig mit einem oder mehreren Heizelementen versehen werden soll, entweder ein einziges Heizelement, das entsprechende Dimensionen (d.h. z.B. eine Breite von 300 cm und eine Länge von 500 cm) und das entweder eine einzige Heizschicht (mit z.B. einer rechteckigen Form mit einer Breite von 290 cm und einer Länge von 490 cm) oder mehrere Heizschichten (z.B. 10 Heizschichten, die jeweils eine rechteckige Form und eine Breite von 98 cm und eine Länge von 145 cm aufweisen) aufweist, angebracht werden, oder vorzugsweise können mehrere Heizelemente (z.B. 5 Heizelemente, die jeweils eine Länge von 300 cm und eine Breite von 100 cm aufweisen, oder 10 Heizelemente, die jeweils eine Länge von 150 cm und eine Breite von 100 cm aufweisen) angebracht werden. In diesem Zusammenhang kann es wünschenswert sein, die Wand nicht vollständig mit Heizelementen abzudecken, sondern Bereiche (z.B. bis zu 10 cm (z.B. 1 bis 10 cm, 2 bis 8 cm, 3 bis 7 cm, 4 bis 6 cm oder 4 bis 5 cm) bis zur Decke oder bis zum Fußboden und/oder bis zu 20 cm (wie 1 bis 20 cm, 2 bis 18 cm, 3 bis 16 cm, 4 bis 12 cm oder 5 bis 10 cm) zur benachbarten Wand) frei zu lassen, beispielsweise um die Zirkulation bzw. den Austausch von Luft, die zwischen dem Isolations-/Reflexionselement und dem Heizelement erwärmt wird, mit der übrigen Raumluft zu verbessern und/oder die Erreichbarkeit von Anschlüssen der Heizelemente zu erhöhen. Alternativ können solche "freien" Flächen mit Substraten, die keine Heizschicht (aber gegebenenfalls eine EMV-Schicht, wie hierin beschrieben) aufweisen, abgedeckt werden.

Die Wärmemenge, die von der Heizschicht abgegeben wird, hängt unter anderem vom Heiztyp ab und kann in an sich bekannter Weise gesteuert werden. Beispielsweise kann die Wärmemenge, die von einer elektrischen Heizschicht abgegeben wird, die mindestens ein auf Kohlenstoff basierendes Leitfähigkeitsadditiv enthält, unter anderem durch die Leistungsparameter der Spannungsquelle, mit der die Heizschicht elektrisch verbunden ist (insbesondere die Strommenge, die durch die Heizschicht fließt, bzw. die Spannung, die an der Heizschicht anliegt; beides kann durch eine entsprechende Steuerungsvorrichtung gesteuert werden), durch Einstellen der Dicke der Heizschicht und/oder durch die Konzentration der Leitfähigkeitsadditive in der Heizschicht variiert werden.

Das elektrische Heizelement, insbesondere das elektrische Heizelement, das eine Heizschicht umfasst, die mindestens ein auf Kohlenstoff basierendes Leitfähigkeitsadditiv enthält, kann mit Wechselspannung oder Gleichspannung betrieben werden. Das elektrische Heizelement, insbesondere das elektrische Heizelement, das eine Heizschicht umfasst, die mindestens ein auf Kohlenstoff basierendes Leitfähigkeitsadditiv enthält, kann mit Niederspannung versorgt werden und dennoch eine ausreichende Heizwirkung realisieren. Das elektrische Heizelement, insbesondere das elektrische Heizelement, das eine Heizschicht umfasst, die mindestens ein auf Kohlenstoff basierendes Leitfähigkeitsadditiv enthält, kann bei einer Versorgung ab Spannungswerten von größer 0 V, bevorzugt mit einer Schutzkleinspannung (Wechsel- oder Gleichspannung), insbesondere im Bereich von 5 V bis 48 V, (wie im Bereich von 18 bis 25 V, beispielsweise 22 V) betrieben werden.

In einer Ausführungsform ist das elektrische Heizelement derart ausgestattet, elektromagnetische Strahlung zumindest teilweise zu absorbieren und/oder zu reflektieren. Hierzu kann in einer Ausführungsform das Substrat auf der ersten Seite die Heizschicht, insbesondere eine Heizschicht, die mindestens ein auf Kohlenstoff basierendes Leitfähigkeitsadditiv enthält, und auf der zweiten Seite eine EMV-Schicht aufweisen, die derart ausgestattet ist, elektromagnetische Strahlung zumindest teilweise zu absorbieren und/oder zu reflektieren. Diese Ausführungsform weist den Vorteil auf, dass elektromagnetische Strahlung, die durch die elektrische Heizschicht erzeugt wird, zumindest teilweise absorbierbar ist oder absorbiert wird und/oder reflektierbar ist oder reflektiert wird. Beispielsweise kann die zweite Seite eine Beschichtung aufweisen, die mindestens ein auf Kohlenstoff basierendes Leitfähigkeitsadditiv enthält und die erdbar oder geerdet ist, wodurch eine zumindest teilweise Absorption von elektromagnetischer Strahlung erreichbar ist oder erreicht wird. Eine Abschirmung von elektromagnetischer Strahlung kann alternativ oder zusätzlich dadurch erreicht werden, dass die Heizschicht eines elektrischen Heizelements, insbesondere die Heizschicht, die mindestens ein auf Kohlenstoff basierendes Leitfähigkeitsadditiv enthält, ein Mittel zur Erdung aufweist, das derart ausgestattet ist, dass die Heizschicht zumindest zeitweise (d.h. wenn das Heizelement nicht zum Beheizen verwendet wird und somit nicht mit elektrischer Spannung und/oder elektrischem Strom beaufschlagt wird) erdbar oder geerdet ist.

In einer bevorzugten Ausführungsform ist das Heizelement derart über das Abstandselement an die Wand anbringbar, dass die vom Heizelement erzeugbare IR-Strahlung dem Isolations-/Reflexionselement zugewandt erzeugbar ist oder erzeugt wird (d.h. das Heizelement ist derart über das Abstandselement an die Wand anbringbar oder wird derart über das Abstandselement an die Wand angebracht, dass die Seite des Substrates, auf die die Heizschicht aufgebracht ist, dem Isolations-/Reflexionselement zugewandt ist). Dies weist den Vorteil auf, dass durch die thermische Isolation der Wand durch das Isolations-/Reflexionselement und die gleichzeitige Beheizung des Isolations-/Reflexionselements eine thermische Entkopplung erreicht wird, was zu einer Verbesserung der Isolation der Wand führt (d.h. es wird kaum Wärmeenergie in die Wand verlagert). Ein weiterer Vorteil ist, dass die Wand weniger Wasser als bei herkömmlichen Heizsystemen, vorzugsweise kein Wasser von Rauminneren aufnimmt. Da durch das Isolations-/Reflexionselement auch die IR-Strahlung, die auf die Wand gerichtet ist, zum größten Teil (vorzugsweise zu mindestens 85%, mehr bevorzugt zu mindestens 90%, mehr bevorzugt zu mindestens 91%, mehr bevorzugt zu mindestens 92%, mehr bevorzugt zu mindestens 93%, mehr bevorzugt zu mindestens 94%, mehr bevorzugt zu mindestens 95%, mehr bevorzugt zu mindestens 96%) reflektiert wird, kann mittels des erfindungsgemäßen Heizsystems ein Raum mit weniger Energie im Vergleich zu herkömmlichen Heizsystemen beheizt werden.

Leitfähigkeitsadditive sind elektrisch leitende Materialien und sind dem Fachmann bekannt. Spezifische Beispiele für auf Kohlenstoff basierende Leitfähigkeitsadditive beinhalten Graphit, Ruß, Kohlenstoff-Nanotubes (CNTs), Carbonfasern und Kohlenstoff-Nanofasem. Die Heizschicht kann ein oder mehrere der vorstehend genannten Leitfähigkeitsadditive beinhalten, z.B. ein Gemisch aus 2 oder 3 der vorstehend genannten Leitfähigkeitsadditive, wie Graphit und Ruß oder Graphit und CNTs.

Die Eigenschaften der vorstehend genannten Leitfähigkeitsadditive werden im Folgenden genauer erläutert.

Graphit ist ein sehr häufig vorkommendes Mineral und gehört zur Ordnung der Halbmetalle und Nichtmetalle. Er ist neben Diamant und Fullerenen die dritte unter irdischen Normalbedingungen stabile Form (Modifikation) des Kohlenstoffs und kristallisiert meist im hexagonalen, sehr selten auch im trigonalen Kristallsystem.

Graphit entwickelt undurchsichtige, graue bis schwarze Kristalle in sechseckiger, tafeliger, schuppiger oder stengeliger Form, die auf den Kristallflächen Metallglanz aufweisen.

Im kristallinen Graphit liegen parallel verlaufende ebene Schichten, die "Basalebenen" oder "GraphenSchichten", vor. Eine Schicht besteht aus kovalent verknüpften Sechsecken, deren Kohlenstoffatome sp²-hybridisiert sind. Innerhalb dieser Ebenen beträgt die Bindungsenergie zwischen den Kohlenstoffatomen 4,3 eV, zwischen ihnen dagegen lediglich 0,07 eV. Aus dieser extremen Richtungsabhängigkeit der Bindungskräfte resultiert eine deutliche Anisotropie der mechanischen, elektrischen und thermischen Eigenschaften des Graphits:
- leichte Spaltbarkeit des reinen Graphits entlang der Basalebenen, deutlich höhere Festigkeit entlang der Kristallschichten;
- thermische und elektrische Isolation orthogonal zu den Basalebenen gegenüber einer fast metallischen Leitfähigkeit entlang der Ebenen.

Die Leitfähigkeit innerhalb einer Ebene wird durch die Delokalisation der π-Elektronen ermöglicht. Weisen die Ebenen keine feste Korrelation zueinander auf, spricht man von turbostratischem Kohlenstoff. Graphit kann auch synthetischen Ursprungs sein, als Produkt der Verkokung von dafür geeigneten Kunststoffen, Pech, Erdöl, Kohle und dergleichen.

Ruß ist ein schwarzer, pulverförmiger Feststoff, der je nach Qualität und Verwendung zu 80% oder mehr aus Kohlenstoff besteht.

Je nach ihrem Anwendungsgebiet besitzen Ruße spezielle Eigenschaftsprofile, die durch die Art des Herstellverfahrens und durch Variation der Prozessparameter gezielt beeinflusst werden.

Ruße, ihre Eigenschaften, Herstellungsverfahren, Verwendungen und so weiter sind bereits weitreichend beschrieben, so dass an dieser Stelle auf die einschlägige Fachliteratur verwiesen wird.

Kohlenstoff-Nanotubes (CNTs) bestehen aus zum Zylinder aufgerollten, geschlossen Graphen-Schichten. Einzelne Röhren nennt man "single wall carbon nanotubes" (SWCNT), Teilchen aus konzentrisch gestapelten Röhren aufsteigenden Durchmessers werden "multiwall carbon nanotubes" (MWCNT) genannt.

CNTs kann man über verschiedene Methoden herstellen. Am bekanntesten sind der Lichtbogenprozess, das Laserablationsverfahren und die katalytisch unterstützte Gasphasenabscheidung (CCVD). Letzteres Verfahren eignet sich zur großtechnischen Produktion von CNTs. Hierbei entstehen die CNT aus gasförmigen Kohlenstofflieferanten (Kohlenwasserstoffe, Alkohole, CO, CO₂) auf metallischen, katalytisch aktiven Substanzen.

Typischerweise weisen SWCNT einen Durchmesser von 0,5 - 4 nm, MWCNT einen Durchmesser zwischen 6 und 100 nm auf. Die Länge von CNTs kann bis zu einigen mm betragen.

Die physikalischen Eigenschaften von CNTs entsprechen weitestgehend jenen des Graphits entlang der Basalebenen.

CNTs werden heute als mechanische Verstärkung, elektrisch und thermisch leitfähiges Additiv in Polymeren, Keramiken und Metallen eingesetzt. Dazu werden die CNTs oft an ihrer Oberfläche chemisch modifiziert, um den Anforderungen einer guten Dispergierbarkeit und Anbindung an die Matrix, die auch als Grundmaterial des Heizmittels bezeichnet werden kann, zu genügen. In der Regel werden die CNTs dem Matrixmaterial zugegeben. Somit soll der Begriff "CNTs" sowohl unmodifizierte als auch modifizierte (insbesondere seitenwandmodifizierte) CNTs umfassen. Aufgrund des hohen Aspektverhältnisses und der hohen spezifischen Oberfläche sind nur Komposite mit verhältnismäßig niedrigem CNT-Gehalt darstellbar.

Carbonfasern (auch Kohlenstofffasern genannt) sind industriell hergestellte Fasern. Man unterscheidet isotrope und anisotrope Typen, wobei isotrope Fasern nur geringe Festigkeiten aufweisen und sich anisotrope Fasern durch hohe Festigkeiten und Steifigkeiten bei gleichzeitig geringer Bruchdehnung in axialer Richtung auszeichnen. Der Durchmesser einer Carbonfaser beträgt etwa 5 bis 9 µm und ist somit größer als der von Kohlenstoff-Nanofasern oder CNTs.

Kohlenstoff-Nanofasern (CNF) bestehen aus Graphenschichten, die entlang der Filamentachse aufeinander gestapelt sind. Der Winkel (die Orientierung) der Graphenebenen bezüglich der Filamentachse wird zur groben Unterscheidung herangezogen. Sogenannte 'Herringbone' CNF besitzen demnach Graphenebenen die in einem Winkel ≠ 90° angeordnet sind. Diese CNF können massiv oder auch hohl sein. Ihre Durchmesser liegen im Bereich 50 nm - 1 µm und ihre Längen können bis zu mm betragen. Im Falle, dass die Graphenschichten in einen Winkel = 90° zur Filamentachse angeordnet sind spricht man von 'Platelet' CNF. Ihre Durchmesser liegen im Bereich von 50 bis 500 nm und ihre Längen können bis zu 50 µm betragen.

Diese CNF werden in der Regel über CVD hergestellt. Ihre Anwendungen finden sich vornehmlich in der Katalyse als Katalysatorträger und als aktive Zusatzstoffe in Li-Ionen-Batterien oder bei der Gasspeicherung.

In der Heizschicht eines elektrischen Heizelements, insbesondere der Heizschicht, die mindestens ein auf Kohlenstoff basierendes Leitfähigkeitsadditiv enthält, kann mindestens ein Bindemittel enthalten sein, wobei das Bindemittel vorzugsweise ein elektrisch nicht leitendes Polymer umfasst. Unter "Bindemittel" wird erfindungsgemäß eine Verbindung verstanden, durch die Partikel (z.B. Leitfähigkeitsadditive, z.B. Graphit und Ruß) auf einem Substrat derart aufbringbar sind, dass die Partikel zusammen mit dem Bindemittel (und gegebenenfalls mit weiteren Substanzen) auf einem Substrat haften. Das Bindemittel fördert also die Kohäsion der Partikel in der Heizschicht und die Adhäsion der Heizschicht an dem Substrat. Bindemittel können organisch oder anorganisch ausgebildet sein. In ähnlicher Weise kann die Dispersion, die mindestens ein auf Kohlenstoff basierendes Leitfähigkeitsadditiv enthält und zur Erzeugung einer Heizschicht, die mindestens ein auf Kohlenstoff basierendes Leitfähigkeitsadditiv enthält, verwendbar ist, mindestens ein wie vorstehend definiertes Bindemittel enthalten.

Das nicht elektrisch leitfähige Polymer ist nicht besonders begrenzt und beinhaltet verschiedene Arten von Polymeren, insbesondere thermoplastische Polymere (auch Thermoplaste genannt), Elastomere und Reaktivharze, gegebenenfalls im Gemisch mit einem oder mehreren Zusatzstoffen (wie Härtern und Beschleunigern). Unter Polymeren versteht man chemische Verbindungen, die aus einer oder wenigen Sorten von gleichartigen Einheiten (Monomeren) aufgebaut sind. Solche Moleküle sind meist kettenartig oder verzweigt aufgebaut und weisen kovalente Bindungen zwischen den Monomeren auf. Nachfolgend werden einige, jedoch nicht ausschließliche Beispiele für bevorzugte Polymere beschrieben, die jeweils einzeln, oder aber in jeder beliebigen Kombination zum Einsatz kommen können. Der Anteil des nicht elektrisch leitfähigen Polymers in der Heizschicht kann 10 bis 95% (beispielsweise 20 bis 85%, 30 bis 80% oder 40 bis 75%) nach Gewicht betragen. Gleichfalls kann der Anteil des nicht elektrisch leitfähigen Polymers in der Dispersion, die mindestens ein auf Kohlenstoff basierendes Leitfähigkeitsadditiv enthält und zur Erzeugung einer Heizschicht, die mindestens ein auf Kohlenstoff basierendes Leitfähigkeitsadditiv enthält, verwendbar ist, 10 bis 90% (beispielsweise 20 bis 80%, 30 bis 75% oder 40 bis 60%) nach Gewicht betragen.

Beispielhafte Gruppen von thermoplastischen Polymeren umfassen die folgenden:
- Polyolefine (wie Polypropylen, Polyethylen, Polybutylen, Polyisobutylen, etc.)
- Polyamide (wie z.B. Polyamid-66, Polyamid-12, Polyamid-11, Polyamid-6, etc.)
- Polyacryl-Polymere (wie Polymethylmethacrylat, Polyacrylnitril, Polyacrylsäure und Derivate, etc.)
- Fluorpolymere (wie Polytetraflourethylen, Polyvinylidenfluorid, etc.)
- aliphatische und aromatische Polyester (wie z.B. Polyglykole, Polyethylenterephthalat, etc.)
- Polyimide (wie z.B. Polyetherimid)
- Poly(aryl)etherketone (wie z.B. Polyetherketone, Polyetheretherketone, etc.)
- Polysulfide (wie z.B. Polyphenylensulfid, Polyphenylensulfon, Polysulfon, Polyethersulfon, etc.)
- Polyacetale
- Cellulose und Derivate davon (wie z.B. Cellulosenitrate, -acetate, -acetatbutyrate, etc.)
- Vinylpolymere (wie z.B. Polyvinylchlorid, Polyvinylacetat, Polyvinylalkohol, Polyvinylbutyral, Polyvinylpyrrolidon, etc.)

Beispielhafte Gruppen von Elastomeren umfassen die folgenden:
- Naturkautschuke, die Chlor-, Styrol-, Nitril-, Schwefel- oder Sauerstoffsubstituenten enthalten können
- Isoprenkautschuke, die Chlor-, Styrol-, Nitril-, Schwefel- oder Sauerstoffsubstituenten enthalten können
- Butadienkautschuke, die Chlor-, Styrol-, Nitril-, Schwefel- oder Sauerstoffsubstituenten enthalten können
- andere Kautschuke, die Chlor-, Styrol-, Nitril-, Schwefel- oder Sauerstoffsubstituenten enthalten können
- Silikonelastomere
- Polyurethane

Ein Beispiel für Reaktivharze ist ein Epoxydharzharz, das epoxygruppenhaltige Monomere, Oligomere und/oder Polymere enthält. Epoxydharze können auf aromatischen Monomeren (z.B. auf Bisphenol-A, -F, Novolac und andere), aliphatischen Monomeren oder cycloaliphatischen Monomeren basieren. Beispiele für die letztere Gruppe beinhalten in nicht begrenzender Weise 3,4-Epoxycyclohexylmethyl-3,4-epoxycyclohexancarboxylat, Bis((3,4-epoxy-cyclohexyl)methyl)adipat und andere Derivate höheren oder auch niedrigeren Molekulargewichts. Die Epoxydharze können mono-, di-, tri-, tetra- und mehrfunktionell sein und umfassen alle Molekulargewichte.

Weitere Gruppen für Reaktivharze stellen Cyanatester und Isocyanate dar und einzelne Vertreter hiervon umfassen in nicht begrenzender Weise 2,4-Diisocyanato-l-methyl-benzol, l-Isocyanato-4-[(4-isocyanatophenyl)methyl]benzol, 1,1 -Bis(4-cyanatophenyl)ethan, 2,2-Bis(4-cyanatophenyl)propan, Oligo(3-methylen-1,5-phenylencyanat) und andere Derivate höheren oder auch niedrigeren Molekulargewichts.

Eine weitere Gruppe für Reaktivharze ist die Gruppe von linearen und verzweigten Diolen und mehrfunktionellen Alkoholen, wie Oligo- und Polyester-Polyole und Polyether-Polyole.

Eine weitere Gruppe für Reaktivharze ist die Gruppe von reaktiven Polyimidsystemen. Reaktive Polyimidsysteme können monofunktionelle Monomere (wie z.B. N-Phenylmaleimid, 2,6-Xylylmaleimid, N-Cyclohexylmaleimid, etc.) und/oder difunktionelle Monomere (wie z.B. 4,4'-Diphenylmethanbismaleimid, N,N'-(4-Methyl-m-phenylen)bismaleimid, N,N'-m-Phenylenbismaleimid, Bisphenol-A Diallylether, o,o'-Diallylbisphenol-A, Polyphenylmethanbismaleimid, Polybenzimidazol, etc.) enthalten.

Eine weitere Gruppe für Reaktivharze ist die Gruppe von Phenolharzen. Beispiele umfassen in nicht begrenzender Weise diejenigen, die auf Novolack oder Resol basieren.

Weitere beispielhafte Gruppen für Reaktivharze umfassen die folgenden:
- ungesättigte Polyester- und Vinylesterharze
- Alkydharze
- Melaminharze
- Polysilane und Silikone
- Acrylate (einschließlich Methacrylate)
- Polychinoxaline
- Peche und Bitumen

Weiterhin können Härter und/oder Beschleuniger, wie Amine, Amide, Amidoamine, Aminoalkohole, Aminosäuren, Anhydride, Imidazole, Cyanamide, Alkohole, Phenole, Polyole, Cyanate, Mercaptane, Carbonsäuren, Metallkomplexe etc., in der Heizschicht (bzw. in der Dispersion, die mindestens ein auf Kohlenstoff basierendes Leitfähigkeitsadditiv enthält und zur Erzeugung einer Heizschicht, die mindestens ein auf Kohlenstoff basierendes Leitfähigkeitsadditiv enthält, verwendbar ist) enthalten sein. Unter "Härter" wird erfindungsgemäß eine Verbindung verstanden, durch die eine Vielzahl einzelner Grundbausteine (z.B. eines Bindemittels) zu einem dreidimensionalen Netzwerk verknüpft wird. Der Härter weist vorzugsweise mindestens zwei funktionelle Gruppen auf, die fähig sind, mit einem Bindemittel zu reagieren, und gleich oder verschieden sein können. Der Anteil des Härters/Beschleunigers in der Heizschicht (bzw. in der Dispersion) ist vorzugsweise stöchiometrisch mit Bezug auf das jeweilige Reaktivharz (d.h. der Härter/Beschleuniger liegt in einer solchen Menge vor, dass theoretisch nahezu jedes Härter/Beschleuniger-Molekül mit einem Reaktivharz-Molekül reagieren kann; vorzugsweise beträgt die Menge an Härter/Beschleuniger 80 bis 150% (wie 85 bis 130%, 90 bis 120%, 95 bis 110%, 97 bis 105%, 98 bis 102% oder 100%) bezogen auf die molare Menge des Reaktivharzes in der Heizschicht (bzw. in der Dispersion).

Es kann bevorzugt sein, dass die Heizschicht (bzw. die Dispersion, die mindestens ein auf Kohlenstoff basierendes Leitfähigkeitsadditiv enthält und zur Erzeugung einer Heizschicht, die mindestens ein auf Kohlenstoff basierendes Leitfähigkeitsadditiv enthält, verwendbar ist) keine organischen Bindemittel enthält. In diesem Fall kann die Heizschicht (bzw. die Dispersion) anstatt des elektrisch nicht leitenden Polymers ein oder mehrere anorganische Bindemittel umfassen. Der Begriff "anorganisches Bindemittel" betrifft erfindungsgemäß einen mineralischen Stoff, der beim Mischen mit Wasser eine insbesondere verarbeitbare Paste ergibt, die anschließend erhärtet bzw. erhärtbar ist. Vorzugsweise ist das anorganische Bindemittel im festen und/oder erhärteten Zustand elektrisch nicht leitend. Die Erhärtung kann hydraulisch (d.h. mit und unter Wasser; Beispiel: Zement, Magnesiabinder), carbonatisch (Beispiel: Kalk), hydratisch (Beispiel: Gips) oder anderweitig (z.B. polymerisch; Beispiel: Wasserglas) oder gemischt erfolgen. Beispiele für anorganische Bindemittel beinhalten in nicht begrenzender Weise Zement (wie Portlandzement, Tonerdezement (Calciumaluminate), Portlandschnellzement (Calciumsilicate, Anhydrit (CaSO₄)), Calciumsulfoaluminatzement (Ye'elimit, Belit, Anhydrit), Sulfathüttenzement (Hüttensand, Anhydrit, Calciumsilicate)), Kalk (wie Brandkalk (CaO) oder gelöschter Kalk (Ca(OH)₂)), Gips (wie Anhydrit (CaSO₄), Halbhydrat (CaSO₄·0,5 H₂O) oder Dihydrat (CaSO₄·2 H₂O)), Magnesiabinder (Magnesia, Magnesiumsalze), Wasserglas (Alkalisilicate, insbesondere Natron- und/oder Kalisilicate) und Geopolymere (z.B. Alumosilicate wie Tone). Bevorzugte Beispiele für anorganische Bindemittel sind gebrannter Kalk, gelöschter Kalk, Wasserglas, Gips, Ton und Zement. Der Anteil des anorganischen Bindemittels in der Heizschicht kann 10 bis 95% (beispielsweise 20 bis 85%, 30 bis 80% oder 40 bis 75%) nach Gewicht betragen. Gleichfalls kann der Anteil des anorganischen Bindemittels in der Dispersion, die mindestens ein auf Kohlenstoff basierendes Leitfähigkeitsadditiv enthält und zur Erzeugung einer Heizschicht, die mindestens ein auf Kohlenstoff basierendes Leitfähigkeitsadditiv enthält, verwendbar ist, 10 bis 90% (beispielsweise 20 bis 80%, 30 bis 75% oder 40 bis 60%) nach Gewicht betragen.

### Isolations-/Reflexionselement

Eine weitere in dem erfindungsgemäßen Heizsystem enthaltene Komponente ist das Isolations-/Reflexionselement. Prinzipiell kann hierfür ein jeglicher Aufbau verwendet werden, der in der Lage ist, Kältebrücken einer Wand zu schließen und IR-Strahlung zu reflektieren. Beispielweise kann das Isolations-/Reflexionselement mindestens eine Isolationsschicht und mindestens eine Reflexionsschicht umfassen, wobei die Isolationsschicht derart ausgestattet ist, Kältebrücken einer Wand zu schließen, und die Reflexionsschicht derart ausgestattet ist, IR-Strahlung, insbesondere in den Raum, der von der Wand begrenzt wird, zu reflektieren.

Vorzugsweise ist die Isolationsschicht mehrschichtig aufgebaut und kann mindestens eine Luftisolationsschicht (wie mindestens 2, mindestens 3, z.B. 1, 2, oder 3 Luftisolationsschichten) aufweisen.

Erfindungsgemäß ist die Isolationsschicht diffusionsoffen, d.h. sie ist derart ausgestattet, einen Durchtritt von Stoffen, insbesondere Wasser, zu erlauben. Vorzugsweise ist eine diffusionsoffene Isolationsschicht derart ausgestattet, dass sie lediglich einen Durchtritt von Stoffen, insbesondere Wasser, in eine Richtung zulässt. In dieser Ausführungsform ist es bevorzugt, dass die Isolationsschicht derart ausgestattet und an die Wand anbringbar oder angebracht ist, wodurch ein Durchtritt von Stoffen, insbesondere Wasser, in Richtung des Raumes ermöglichbar ist oder ermöglicht wird (d.h. ein Durchtritt von Stoffen, insbesondere Wasser, vom Raum in Richtung Wand verhinderbar ist oder verhindert wird). Vorzugsweise bedeckt die Isolationsschicht vollständig die Wand, an der das erfindungsgemäße Heizsystem anbringbar oder angebracht ist. Beispiele für die Isolationsschicht beinhalten Plastikfolien, insbesondere Plastikfolien aus Polyethylen, die vorzugsweise eine Dicke von 0,05 bis 0,5 mm (wie 0,06 bis 0,4 mm, 0,07 bis 0,3 mm, 0,08 bis 0,2 mm, 0,09 bis 0,15 mm oder 0,1 bis 0,12 mm) aufweisen, Aluminiumfolien, Aluminium-Luftpolsterfolien und Aluminiumverbundfolien. Die Isolationsschicht weist vorzugsweise eine Wasserdampfdiffusionswiderstandszahl (µ) von mindestens 40 000 (wie mindestens 50 000, mindestens 60 000, mindestens 70 000, mindestens 80 000, mindestens 90 000 oder mindestens 100 000) auf.

Als Reflexionsschicht kann eine jegliche Schicht verwendet werden, die geeignet ist, IR-Strahlung zu reflektieren. Beispiele für die Reflexionsschicht beinhalten eine Folie aus Aluminium (insbesondere Reinaluminium), Aluminium-Verbundfolien, Aluminium-Luftpolsterfolien und mit Aluminium beschichtete Bauplatten. Ein besonders bevorzugtes Beispiel ist eine Aluminiumfolie (insbesondere aus Reinaluminium).

In einer Ausführungsform ist das Isolations-/Reflexionselement derart ausgestattet, elektromagnetische Strahlung zumindest teilweise zu absorbieren und/oder zu reflektieren. Hierzu kann das Isolations-/Reflexionselement eine EMV-Schicht aufweisen, die derart ausgestattet ist, elektromagnetische Strahlung zumindest teilweise zu absorbieren und/oder zu reflektieren. Beispielsweise kann die EMV-Schicht mindestens ein auf Kohlenstoff basierendes Leitfähigkeitsadditiv enthalten und erdbar oder geerdet sein, wodurch eine zumindest teilweise Absorption von elektromagnetischer Strahlung erreichbar ist oder erreicht wird. Alternativ oder zusätzlich kann die Reflexionsschicht des Isolations-/Reflexionselements derart ausgestattet sein, elektromagnetische Strahlung zumindest teilweise zu absorbieren und/oder zu reflektieren; beispielsweise kann eine Abschirmung dadurch erfolgen, dass zumindest ein Teil der elektromagnetischen Strahlung an der Reflexionsschicht des Isolations-/Reflexionselements reflektierbar ist oder reflektiert wird und/oder zumindest ein Teil der elektromagnetischen Strahlung von der Reflexionsschicht des Isolations-/Reflexionselements, sofern sie ein Mittel zur Erdung aufweist, absorbierbar ist oder absorbiert wird.

Vorzugsweise ist ein diffusionsoffenes Isolations-/Reflexionselement derart ausgestattet, dass es lediglich einen Durchtritt von Stoffen, insbesondere Wasser, in eine Richtung zulässt. In dieser Ausführungsform ist es bevorzugt, dass das Isolations-/Reflexionselement derart ausgestattet und an die Wand anbringbar oder angebracht ist, dass ein Durchtritt von Stoffen, insbesondere Wasser, in Richtung des Raumes ermöglichbar ist oder ermöglicht wird (d.h. ein Durchtritt von Stoffen, insbesondere Wasser, vom Raum in Richtung Wand verhinderbar ist oder verhindert wird). Vorzugsweise bedeckt das Isolations-/Reflexionselement vollständig die Wand, an der das erfindungsgemäße Heizsystem anbringbar oder angebracht ist. Beispiele für ein erfindungsgemäß verwendbares Isolations-/Reflexionselement beinhalten insbesondere eine jegliche Kombination der vorstehend beschriebenen Isolations- und Reflexionsschichten. Spezifische Beispiele sind Aluminium-Verbundfolien, wie doppelt mit Aluminium beschichtete Verbundfolien, die z.B. von den Firmen Alufox, Isofolie oder Brangs + Heinrich erhältlich sind.

Das Isolations-/Reflexionselement kann in an sich bekannter Weise auf die Wand aufbringbar oder aufgebracht sein. Beispielweise kann das Isolations-/Reflexionselement mittels eines Klebbandes an der Wand fixiert werden. Daher kann in einer Ausführungsform das Isolations-/Reflexionselement eine Klebschicht aufweisen, die derart ausgestattet ist, dass das Isolations-/Reflexionselement an eine Wand aufbringbar oder aufgebracht ist.

### Abstandselement

Eine weitere in dem erfindungsgemäßen Heizsystem enthaltene Komponente ist das Abstandselement. Dieses ist zwischen dem Isolations-/Reflexionselement und dem Heizelement anordbar oder angeordnet und derart konfiguriert, das Heizelement von dem Isolations-/Reflexionselement zu beabstanden. Prinzipiell kann ein jegliches Material (wie Holz, Kunststoff (insbesondere thermostabiler Kunststoff) oder Metall) und eine jegliche Konstruktion (z.B. Latten mit einem Profil von 20 x 50 mm) oder Metallständer-Profile als U- oder C Profilausführung) hierfür verwendet werden. Vorzugsweise ist das Abstandselement eine Lattung aus Holz (wie Dachlatten, insbesondere gehobelt und/oder aus Fichte) oder thermostabilem Kunststoff oder ein Metallständer-Profil als U- oder C Profilausführung. Das Abstandselement dient unter anderem dazu, ein weiteres Luftpolster zur Isolation bereitzustellen und/oder Raum für Anschlüsse und Verkabelung bereitzustellen.

Das Abstandselement kann mit einem jeglichen bekannten Mittel angebracht werden (z.B. mittels Schrauben, Nägeln, etc.), wobei bevorzugte Mittel derart ausgestattet sind, die Erzeugung von Kältebrücken insbesondere einer Wand zu verhindern (z.B. beinhalten solche bevorzugten Mittel Kunststoffdübel und Schrauben aus faserverstärktem Kunststoff (anstatt von Metallschrauben)).

### Steuerungselement und weitere optionale Komponenten

Das gegebenenfalls in dem erfindungsgemäßen Heizsystem enthaltene Steuerungselement umfasst eine Spannungsquelle (zur Bereitstellung von elektrischer Spannung und/oder elektrischem Strom) und eine Steuerungsvorrichtung zum Steuern des Heizsystems. Weitere optionale Komponenten des erfindungsgemäßen Heizsystems sind elektrische Leitungen, die das Steuerungssystem mit den Kontaktelementen verbinden. Die elektrischen Leitungen sind entsprechend den Richtlinien und Normen, die dem Fachmann bekannt sind, zu verlegen. Vorzugsweise können die elektrischen Leitungen versteckt, d.h. in dem Zwischenraum, der durch das Abstandselement zwischen dem Isolations-/Reflexionselement und dem Heizelement aufgespannt wird, verlegt werden. In einer Ausführungsform können die elektrischen Leitungen mittels einer oder mehrerer Sammelklemmen miteinander verbunden werden.

Der Begriff "Spannungsquelle" soll erfindungsgemäß eine jegliche elektrische Energiequelle umfassen, die geeignet ist, eine elektrische Spannung und/oder einen elektrischen Strom bereitzustellen. In einer Ausführungsform ist die Spannungsquelle ein Netzteil, d.h. ein Gerät oder eine Baugruppe, das/die an das Hausstromnetz (typischerweise 230 V AC ± 10%, 50/60 Hz) angeschlossen werden kann und andere Geräte oder Baugruppen, die andere Spannungen und/oder Ströme benötigen, als vom Hausstromnetz bereitgestellt wird, mit Energie versorgt. Das Netzteil kann ein Schalt- oder Trafonetzteil sein. In einer Ausführungsform stellt die Spannungsquelle eine Wechselspannung (insbesondere im Schutzkleinspannungsbereich) bereit oder ist derart konfiguriert und ausgestaltet, eine Wechselspannung (insbesondere im Schutzkleinspannungsbereich) bereitzustellen. In einer alternativen Ausführungsform stellt die Spannungsquelle eine Gleichspannung (insbesondere im Schutzkleinspannungsbereich) bereit oder ist derart konfiguriert und ausgestaltet, eine Gleichspannung (insbesondere im Schutzkleinspannungsbereich) bereitzustellen.

In einer Ausführungsform ist die Spannungsquelle derart ausgelegt und konfiguriert, mehr als eine (z.B. mindestens 2, mindestens 3, mindestens 4, mindestens 5, mindestens 6, mindestens 7, mindestens 8, mindestens 9, mindestens 10, z.B. bis zu 40, bis zu 30, bis zu 25, bis zu 20, bis zu 15 oder bis zu 10, wie 2 bis 40, 3 bis 30 4 bis 25, 5 bis 20, 6 bis 15 oder 2 bis 10) Heizelemente mit Spannung (und/oder elektrischem Strom) gleichzeitig versorgen zu können.

Die Steuerungsvorrichtung ist vorzugsweise derart konfiguriert und ausgestaltet, das erfindungsgemäße Heizsystem zu steuern, d.h. zu steuern, mit welcher elektrischen Spannung und/oder welchem elektrischen Strom die Heizschicht (oder Heizschichten) im Falle eines elektrischen Heizelements bzw. mit welcher Menge an erwärmten Wasser bzw. Öl und in welcher Geschwindigkeit die Leitungen (oder Leitungen) im Falle von wasser- oder ölgestützten Heizelementen beaufschlagt wird (werden), um die gewünschte Temperatur zu erreichen.

Hierzu ist es zweckmäßig, dass in einer Ausführungsform das Steuerungselement einen Thermostat aufweist, der insbesondere derart konfiguriert und ausgestaltet ist, die Temperatur des Raumes, in dem sich das erfindungsgemäße Heizsystem befindet, messen und gegebenenfalls überwachen zu können. Zweckmäßig ist der Thermostat derart konfiguriert und ausgestaltet, mit der Steuerungsvorrichtung kommunizieren zu können. Vorteilhafterweise ist der Thermostat in dem Raum, in dem sich das erfindungsgemäße Heizsystem befindet, angebracht, jedoch vorzugsweise nicht direkt neben einem erfindungsgemäßen Heizsystem, sondern eher an einer Wand, auf der kein Heizsystem angebracht ist (beispielsweise kann sich der Thermostat an einer Wand des Raumes mit dem erfindungsgemäßen Heizsystem befinden, die der Wand gegenüberliegt, an der das Heizsystem angebracht ist). In einer Ausführungsform ist der Thermostat derart konfiguriert und ausgestaltet, dass an ihm die gewünschte Raumtemperatur (Solltemperatur) einstellbar ist.

In einer Ausführungsform des elektrischen Heizelements, insbesondere des elektrischen Heizelements, das eine Heizschicht aufweist, die mindestens ein auf Kohlenstoff basierendes Leitfähigkeitsadditiv enthält, misst die Steuerungsvorrichtung im Betrieb fortwährend den elektrischen Strom, der durch die Heizschicht (oder Heizschichten) fließt, und vergleicht diesen mit einem Normalwert/Referenzwert. Dadurch kann sichergestellt werden, dass Fehlfunktionen der Heizschicht (z.B. Funkenbildung auf der Heizschicht) oder mechanische Änderungen des Substrates oder der Wand, an der das Heizsystem angebracht ist, nicht zu einer unsicheren Situation bzw. Gefährdung von Personen und/oder Tieren führen.

Beispielsweise weist in einer Ausführungsform des erfindungsgemäßen Heizsystems das Steuerungselement eine Abschaltautomatik der Spannungsquelle auf. Hierzu kann das Steuerungselement derart konfiguriert und ausgestaltetet sein, dass es die Entstehung von Funken auf einer Heizschicht erkennt und bei Auftreten derartiger Funken die Abschaltautomatik aktiviert, d.h. die Spannungsquelle abschaltet. Alternativ oder zusätzlich ist das Steuerungselement derart konfiguriert und ausgestaltetet, dass es überwacht, welche Strommenge durch eine Heizschicht fließt, und bei einer Abweichung von mindestens 1% (wie mindestens 5% oder mindestens 10%) des durch die Heizschicht fließenden Stroms vom Normalwert/Referenzwert die Abschaltautomatik aktiviert, d.h. die Spannungsquelle abschaltet.

In einer Ausführungsform des erfindungsgemäßen Heizsystems weist das Steuerungselement einen Temperatursensor auf der Heizschicht (oder auf einer oder mehreren der Heizschichten oder allen Heizschichten) auf. Der Temperatursensor ist vorteilhafterweise derart ausgestaltet und konfiguriert, die Temperatur unmittelbar auf oder über der Heizschicht (falls weitere Schichten über der Heizschicht aufgetragen wurden) zu messen und die Messdaten an den Thermostat und/oder die Steuerungsvorrichtung weiterzuleiten. Dadurch ist eine Gefährdung durch ein übermäßig heißes Heizsystem (z.B. mit einer Temperatur an der Oberfläche der Heizschicht von über 40°C oder über 50°C (insbesondere falls das Heizelement an einem Bereich einer Wand angebracht ist, der für Personen erreichbar ist) oder mit einer Temperatur an der Oberfläche der Heizschicht von über 70°C oder über 120°C (insbesondere falls das Heizelement an einem Bereich einer Wand angebracht ist, der für Personen nicht erreichbar ist)) verhinderbar.

Das Steuerungselement kann in dem Raum, der das Heizelement beinhaltet, angebracht sein. In einer alternativen Ausführungsform kann sich das Steuerungselement an einem anderen Ort (z.B. in einem Nebenraum, in einem zentralen Schalt- oder Sicherungsraum, an den der zu beheizende Raum angeschlossen ist, oder in einem Keller) befinden.

Das erfindungsgemäße Heizsystem kann dazu verwendet werden, Temperaturen zu erzeugen, die üblicherweise im Inneren eines Hauses (wie eines Wohnhauses) vorgefunden werden, beispielweise eine Temperatur im Bereich von 15 bis 30°C. Dabei kann die maximale Oberflächentemperatur der Heizschicht bis zu 40°C betragen, insbesondere wenn das Heizelement an einem Bereich einer Wand angebracht ist, der für Personen erreichbar ist (typischerweise in einem Bereich der Wand, der einen Abstand vom Boden von weniger als 2,5 m aufweist). Wenn das Heizelement an einem Bereich einer Wand angebracht ist, der für Personen nicht erreichbar ist (typischerweise in einem Bereich der Wand, der mindestens einen Abstand von 2,5 m vom Boden aufweist, z.B. an einer Decke oder an einer entsprechenden Schräge eines Raumes), kann die maximale Oberflächentemperatur der Heizschicht bis zu 120°C (wie bis zu 110°C, bis zu 100°C, bis zu 90°C, bis zu 80°C oder bis zu 70°C) betragen. In einer Ausführungsform ist auch vorgesehen, das erfindungsgemäße Heizsystem dazu zu verwenden, höhere als übliche Raumtemperaturen zu erreichen, beispielsweise Temperaturen, die in einer Sauna vorgefunden werden (z.B. 80°C bis 120°C, wie 85°C bis 110°C).

Das erfindungsgemäße Heizsystem ist insbesondere dazu geeignet ist, einen Raum zu beheizen, wobei es nicht darauf ankommt, wie der Raum ausgestattet ist oder wo er sich befindet. Z.B. kann der Raum ein Teil eines Hauses oder Gebäudes (d.h. immobil) sein; der Begriff "Raum" schließt aber auch mobile Varianten (wie Container) ein. Der Begriff "Wand" schließt erfindungsgemäß jegliche Begrenzung eines Raumes ein, wobei Fenster ausgeschlossen sind. Der Begriff "Wand" umfasst insbesondere neben den vertikalen Wänden (tragend oder nicht tragend) auch eventuell vorhandene Trennwände, eventuell vorhandene Schrägen und Decken des Raumes (einschließlich Abhängdecke).

Das erfindungsgemäße Heizsystem, insbesondere dasjenige mit einem elektrischen Heizelement wie mit einer Heizschicht, die mindestens ein auf Kohlenstoff basierendes Leitfähigkeitsadditiv enthält, weist den Vorteil auf, dass es zum Beheizen von Räumen verwendet werden kann, in denen die Raumluft möglichst wenig bewegt werden soll (z.B. Patientenzimmer oder Operationssäle von Krankenhäusern, Zimmer von Allergikern, etc.). Ein weiterer Vorteil besteht darin, dass das erfindungsgemäße Heizsystem eine thermische Entkopplung erreicht, was zu einer Verbesserung der Isolation der Wand führt (d.h. es wird kaum Wärmeenergie in die Wand verlagert). Ein weiterer Vorteil ist, dass die Wand weniger Wasser als bei herkömmlichen Heizsystemen, vorzugsweise kein Wasser von Rauminneren aufnimmt.

Das Heizelement des erfindungsgemäßen Heizsystems hat bei einer Temperatur von 23°C eine Abstrahlungsleistung von 392 W/m². Durch die Reflexion mittels des Isolations-/Reflexionselements (z.B. einer Aluminiumfolie wie einer glänzenden Al-Folie) reduziert sich die nach außen gerichtete Abstrahlungsleistung auf 17 W/m², was nur noch 4% der Ausgangsleistung sind. Somit kann durch das Isolations-/Reflexionselement des erfindungsgemäßen Heizsystems die IR-Strahlung, die auf die Wand gerichtet ist, zum größten Teil (vorzugsweise zu mindestens 85%, mehr bevorzugt zu mindestens 90%, mehr bevorzugt zu mindestens 91%, mehr bevorzugt zu mindestens 92%, mehr bevorzugt zu mindestens 93%, mehr bevorzugt zu mindestens 94%, mehr bevorzugt zu mindestens 95%, mehr bevorzugt zu mindestens 96%) reflektiert werden, wodurch mittels des erfindungsgemäßen Heizsystems ein Raum mit weniger Energie im Vergleich zu herkömmlichen Heizsystemen beheizt werden kann. Das stellt den weiteren Vorteil bereit, dass die in das System eingespeiste Energie zum größten Teil (vorzugsweise zu mindestens 85%, mehr bevorzugt zu mindestens 90%, mehr bevorzugt zu mindestens 91%, mehr bevorzugt zu mindestens 92%, mehr bevorzugt zu mindestens 93%, mehr bevorzugt zu mindestens 94%, mehr bevorzugt zu mindestens 95%, mehr bevorzugt zu mindestens 96%) nur dem beheizten Raum zuführbar ist oder zugeführt wird.

Erste Messversuche haben gezeigt, dass beim Einsatz des erfindungsgemäßen Heizsystems, insbesondere desjenigen mit einem elektrischen Heizelement wie mit einer Heizschicht, die mindestens ein auf Kohlenstoff basierendes Leitfähigkeitsadditiv enthält, sich der Heizenergieverbrauch wohnflächenbezogen bei etwa 15 bis 20 kWh/m²a einstellen wird. Derzeit werden Werte unter 100 kWh/m²a bereits als gut angesehen. Das KfW - 70 - Haus schreibt einen Maximalverbrauch von 45 kWh/m²a vor.

Sehr vorteilhaft ist bei dem erfindungsgemäßen Heizsystem, insbesondere demjenigen mit einem elektrischen Heizelement wie mit einer Heizschicht, die mindestens ein auf Kohlenstoff basierendes Leitfähigkeitsadditiv enthält, dass auch Strom aus der Eigenerzeugung, wie z.B. durch Photovoltaik und/oder Blockkraftheizanlagen, zum Betreiben des Heizsystems problemlos verwendet werden kann.

Wartungskosten fallen bei dem erfindungsgemäßen Heizsystem, insbesondere demjenigen mit einem elektrischen Heizelement wie mit einer Heizschicht, die mindestens ein auf Kohlenstoff basierendes Leitfähigkeitsadditiv enthält, nicht an, da das gesamte System keinerlei Verschleiß unterliegt.

### Kit zum Herstellen eines Heizsvstems

Hinsichtlich der Ausgestaltungen der Komponenten des erfindungsgemäßen Kits (insbesondere bezüglich des Heizelements, des Isolations-/Reflexionselements und des Abstandselements) wird vollinhaltlich auf die vorstehenden Ausführungen bezüglich des ersten erfindungsgemäßen Aspekts (Heizsystem) Bezug genommen.

Insbesondere ist bevorzugt, dass das im erfindungsgemäßen Kit enthaltene Heizelement derart ausgestattet ist, IR-Strahlung in jede Richtung abzugeben (d.h. es weist keine Aluminiumfolie, insbesondere keine Reflexionsschicht, durch die IR-Strahlung reflektierbar ist oder reflektiert wird, insbesondere keine IR-Reflexionsschicht, auf).

### Verwendungen und Verfahren

Das erfindungsgemäße elektrische Heizsystem bietet neben seiner Verwendung zum Beheizen eines Raumes auch den Vorteil, dass es zum zumindest teilweisen Abschirmen des Raumes von elektromagnetischer Strahlung verwendet werden kann. Dies kann auf mehrere Arten erreicht werden: (i) die Heizschicht wird nicht mit elektrischen Strom oder elektrischer Spannung beaufschlagt, sondern auf Erdung gelegt; (ii) das Heizelement weist auf seiner zweiten Seite eine EMV-Schicht auf; und/oder (iii) das Isolations-/Reflexionselement weist eine EMV-Schicht auf (eine Kombination von (i) und (ii), (i) und (iii), (ii) und (iii) oder (i) bis (iii) ist auch möglich).

Weiterhin kann das erfindungsgemäße Kit zur Herstellung eines Heizsystems, insbesondere eines erfindungsgemäßen Heizsystems, an einer Wand verwendet werden.

Hinsichtlich der Ausgestaltungen des erfindungsgemäßen Verfahrens zum Beheizen eines Raumes wird vollinhaltlich auf die vorstehenden Ausführungen bezüglich der anderen erfindungsgemäßen Aspekte, insbesondere des ersten erfindungsgemäßen Aspekts (Heizsystem), Bezug genommen.

### Kurze Beschreibung der Figuren

Figur 1 ist eine Schnittzeichnung eines Teils des erfindungsgemäßen Heizsystems (18), in der lediglich das Isolations-/Reflexionselement (2) sowie das Abstandselement (3) dargestellt sind.
Figur 2 ist eine Draufsicht eines Heizelements (4) des erfindungsgemäßen Heizsystems (18).
Figur 3 ist eine schematische Schnittzeichnung eines elektrischen Anschlusses (10) zwischen einem Kontaktelement (6) und einer elektrischen Leitung (11).
Figur 4 ist eine Schnittzeichnung eines erfindungsgemäßen Heizsystems (18).
Figur 5 zeigt eine schematische Darstellung eines erfindungsgemäßen Heizsystems (18) mit 10 Heizelementen (4).

Nachstehend werden unter Bezugnahme auf die beigefügten Figuren einige bevorzugte Ausführungsbeispiele beschrieben, die allerdings nicht begrenzend für die Erfindung sind und lediglich als beispielhafte Ausführungsformen der Erfindung verstanden werden sollen. Die Elemente der Figuren sind nicht notwendigerweise maßstabsgetreu zueinander gezeigt. Sofern nicht anders angegeben werden in den Figuren gleiche, funktionsgleiche und gleich wirkende Elemente jeweils mit denselben Bezugszeichen bezeichnet.

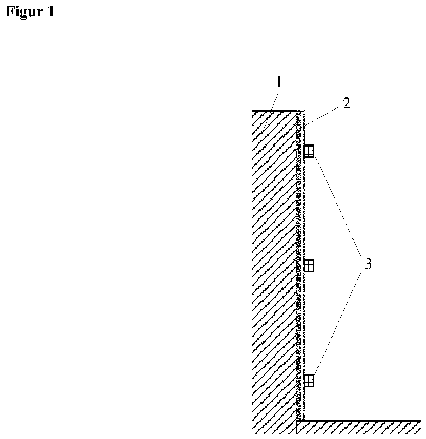

In Figur 1 ist eine Schnittzeichnung eines Teils des erfindungsgemäßen Heizsystems (18), in der lediglich das Isolations-/Reflexionselement (2) sowie das Abstandselement (3) dargestellt sind. Das Isolations-/Reflexionselement (2) besteht hierbei aus einer Luftisolationsschicht, die auf die Wand (1) vollflächig aufgeklebt ist, um Kältebrücken der Wand zu schließen, sowie einer Reflexionsschicht in Form einer Aluminiumfolie. Das Abstandselement (3) liegt in der Form einer Holzlattung vor, die auf dem Isolations-/Reflexionselement (2) aufgebracht ist.

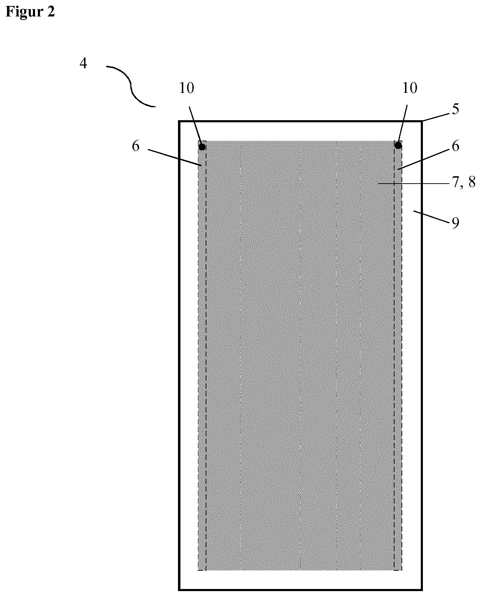

Figur 2 zeigt eine Draufsicht eines Heizelements (4) des erfindungsgemäßen Heizsystems (18). Das Substrat (5) kann eine Gipsfaserplatte (z.B. eine Platte mit den Maßen 120 cm x 60 cm x 1,5 cm der Firma Fermacell) oder eine andere brandhemmende und für den Baubereich geeignete Platte sein. Dieses Substrat (5) wird mit Kontaktelementen (6) (vorzugsweise Kupferelektroden, selbstklebend oder aber auch durch z.B. thermisches Spritzen von Kupfer erzeugt) ausgestattet und mit einer Dispersion, die mindestens ein auf Kohlenstoff basierende Leitfähigkeitsadditiv enthält, überbeschichtet, um eine Heizschicht (7) auf dem Substrat (5) zu erzeugen, wobei ein umlaufender Randbereich (9) auf dem Substrat (5) freigelassen wird, um das Heizelement (4) auf dem Abstandelement (3) montieren zu können (z.B. mittels Schrauben). Die Kontaktelemente (6) werden dann mit einem elektrischen Anschluss (10) versehen. Anschließend kann noch eine Schutzschicht (8) zum Schutz der Heizschicht (7) vor mechanischer Beschädigung aufgetragen werden.

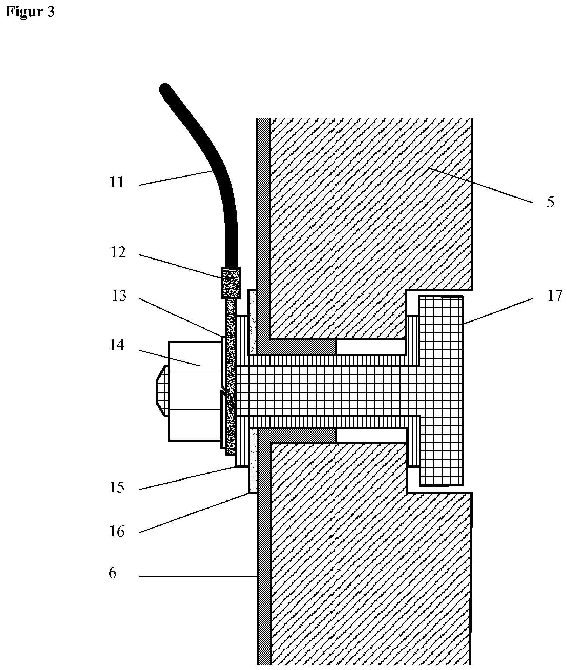

Figur 3 ist eine schematische Schnittzeichnung eines elektrischen Anschlusses (10) zwischen einem Kontaktelement (6) und einer elektrischen Leitung (11). Beispielsweise wird in das Substrat (5) ein Loch gebohrt und gesenkt. Die Kontaktelemente (6) werden angeschnitten und in das Loch eingeklebt. Danach wird ein Niet (15) eingepresst (auch mit Gewinde möglich), eine Schraube (17) montiert, eine Unterlegscheibe (16) zur sicheren elektrischen Kontaktierung installiert, sowie ein Kabelschuh (12) aufgesetzt, um eine elektrische Verbindung mit der elektrischen Leitung (11), die zu der Spannungsquelle (nicht gezeigt) führt, herzustellen. Die Sicherungsmutter (14) verpresst den Aufbau inkl. einer Sicherungsscheibe (13). Danach kann der Aufbau auf Schraubenkopfseite verspachtelt, tapeziert und/oder überstrichen werden.

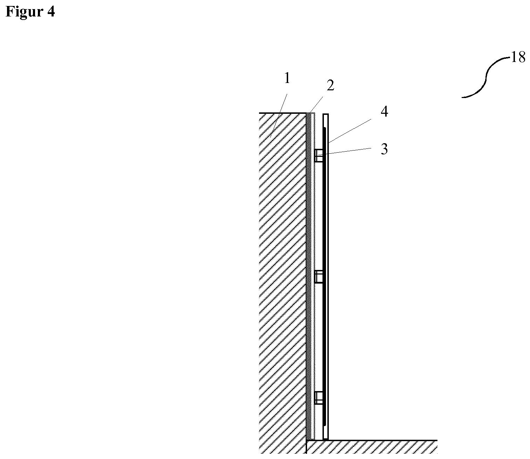

Figur 4 ist eine Schnittzeichnung eines erfindungsgemäßen Heizsystems (18). Das Heizelement (4), wie in Figur 2 gezeigt, wird mit der Heizschicht zur Wand auf das Abstandselement (3) (z.B. Holzlattung) aufgeschraubt. Somit wird die von dem Heizelement (4) abgegebene IR-Strahlung an dem Isolations-/Reflexionselement (2) reflektiert und in den Raum gestrahlt. Dies erhöht den Wirkungsgrad des erfindungsgemäßen Heizsystems erheblich.

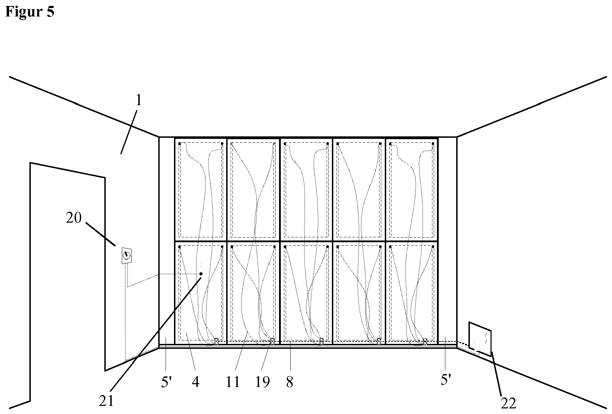

Figur 5 zeigt eine schematische Darstellung eines erfindungsgemäßen Heizsystems (18) mit 10 Heizelementen (4). Die Heizelemente (4) werden (nahezu) vollflächig an der Wand (1) angebracht. Bereiche, die nicht passen oder bei denen keine Heizung erwünscht ist, können einfach mit normalen Substraten (5') ohne Heizschicht ausgekleidet werden. Die Heizelemente (4) werden mittels geeigneten Leitungen (11) verkabelt (vorzugsweise versteckt, z.B. zwischen der Wand (1) und dem Heizelement (4)), gegebenenfalls über Sammelklemmen (19) miteinander verbunden (Leistung der Spannungsquelle muss darauf angepasst sein) und über das Steuerungselement (22) mit Spannung, insbesondere Schutzkleinspannung versorgt. Das Steuerungselement (22) kann, wie in Figur 5 gezeigt, im gleichen Raum wie die Heizelemente (4) angebracht sein. In einer alternativen (nicht gezeigten) Ausführungsform kann sich das Steuerungselement (22) an einem anderen Ort (z.B. in einem Nebenraum, in einem zentralen Schalt- oder Sicherungsraum, an den der zu beheizende Raum angeschlossen ist, oder in einem Keller) befinden. Weiterhin weist die in Figur 5 gezeigte Ausführungsform einen Thermostat (20) und einen Temperatursensor (21) auf, die dazu dienen, die Bedienbarkeit und Sicherheit des erfindungsgemäßen Heizsystems zu erhöhen (einerseits, da mittels des Thermostaten (20) eine einfache Einstellung der gewünschten Raumtemperatur realisierbar ist, und andererseits, da durch den Temperatursensor (21) ein übermäßig heißes Heizsystem (z.B. mit einer Temperatur an der Oberfläche der Heizschicht von über 50°C) rechtzeitig erkennbar und behebbar (z.B. durch Aktivierung einer Abschaltautomatik) ist).

### Bezugszeichenliste

- 1: Wand
- 2: Isolations-/Reflexionselement
- 3: Abstandselement
- 4: Heizelement
- 5: Substrat
- 6: Kontaktelement
- 7: Heizschicht
- 8: Schutzschicht
- 9: umlaufender Randbereich zur Montage
- 10: elektrischer Anschluss
- 11: elektrische Leitung
- 12: Kabelschuh
- 13: Sicherungsscheibe
- 14: Sicherungsmutter
- 15: Niet
- 16: Unterlegscheibe
- 17: Schraube
- 18: Heizsystem
- 19: Sammelklemme
- 20: Thermostat
- 21: Temperatursensor
- 22: Steuerungselement

## Patentansprüche

1. Heizsystem (18) zum Beheizen eines Raumes, umfassend
(i) ein Isolations-/Reflexionselement (2), das an eine Wand (1) des Raumes anbringbar oder angebracht ist und mindestens eine Isolationsschicht und mindestens eine Reflexionsschicht umfasst, wobei die Isolationsschicht diffusionsoffen ist und derart ausgestattet ist, Kältebrücken einer Wand (1) zu schließen, und die Reflexionsschicht derart ausgestattet ist, IR-Strahlung zu reflektieren,
(ii) ein Heizelement (4), das zur Erzeugung von IR-Strahlung ausgestattet ist, und
(iii) ein Abstandselement (3), das zwischen dem Isolations-/Reflexionselement (2) und dem Heizelement (4) anordbar oder angeordnet ist und derart konfiguriert ist, das Heizelement (4) von dem Isolations-/Reflexionselement (2) zu beabstanden.

2. Kit zum Herstellen eines Heizsystems (18) an einer Wand (1), wobei das Kit umfasst:
(1) ein Isolations-/Reflexionselement (2), das an eine Wand (1) eines Raumes anbringbar ist und mindestens eine Isolationsschicht und mindestens eine Reflexionsschicht umfasst, wobei die Isolationsschicht diffusionsoffen ist und derart ausgestattet ist, Kältebrücken einer Wand (1) zu schließen, und die Reflexionsschicht derart ausgestattet ist, IR-Strahlung zu reflektieren,
(2) ein Heizelement (4), das zur Erzeugung von IR-Strahlung ausgestattet ist, und
(3) ein Abstandselement (3), das zwischen dem Isolations-/Reflexionselement (2) und dem Heizelement (4) anordbar und derart konfiguriert ist, das Heizelement (4) von dem Isolations-/Reflexionselement (2) zu beabstanden.

3. Heizsystem (18) nach Anspruch 1 oder Kit nach Anspruch 2, wobei das Heizelement (4) ein elektrisches Heizelement, insbesondere ein elektrisches Heizelement, das mit einer Schutzkleinspannung betreibbar ist, ist, wobei das Heizelement (4) bevorzugt ein Substrat (5) umfasst, das mit einer Heizschicht (7) beschichtet ist und gegebenenfalls brandhemmend ausgestattet ist, wobei die Heizschicht (7) vorzugsweise mindestens ein auf Kohlenstoff basierendes Leitfähigkeitsadditiv enthält.

4. Heizsystem (18) oder Kit nach Anspruch 3, wobei das elektrische Heizelement derart ausgestattet ist, elektromagnetische Strahlung zumindest teilweise zu absorbieren, wobei das Substrat (5) vorzugsweise eine erste Seite, die mit der Heizschicht (7) beschichtet ist, und eine zweite Seite, die der ersten Seite gegenüberliegt, aufweist, wobei die zweite Seite mit einer EMV-Schicht beschichtet ist, die derart ausgestattet ist, elektromagnetische Strahlung zumindest teilweise zu absorbieren, wobei das Heizelement (4) gegebenenfalls ein Mittel zur Erdung aufweist, das derart ausgestattet ist, dass die Heizschicht (7), wenn diese nicht mit elektrischer Spannung und/oder elektrischem Strom beaufschlagt wird, erdbar ist.

5. Heizsystem (18) oder Kit nach Anspruch 3 oder 4, wobei das Heizelement (4) zwei elektrisch leitfähige Kontaktelemente (6) umfasst, die an dem Heizelement (4) derart anordbar oder angeordnet sind, dass das Heizelement (4) mit elektrischer Spannung und/oder elektrischem Strom beaufschlagbar ist.

6. Heizsystem (18) oder Kit nach Anspruch 5, wobei die zwei elektrisch leitfähigen Kontaktelemente (6) elektrisch leitfähige Metallstreifen, insbesondere aus Kupfer, umfassen.

7. Heizsystem (18) oder Kit nach Anspruch 5 oder 6, wobei jedes der zwei elektrisch leitfähigen Kontaktelemente (6) eine Klebschicht aufweist.

8. Heizsystem (18) nach einem der Ansprüche 1 und 3 bis 7 oder Kit nach einem der Ansprüche 2 bis 7, wobei das Heizelement (4) eine Schutzschicht (8) aufweist.

9. Heizsystem (18) nach einem der Ansprüche 1 und 3 bis 8 oder Kit nach einem der Ansprüche 2 bis 8, wobei:
(i) die Reflexionsschicht derart ausgestattet ist, IR-Strahlung in den Raum zu reflektieren; und/oder
(ii) die Isolationsschicht mehrschichtig aufgebaut ist und mindestens eine Luftisolationsschicht aufweist; und/oder
(iii) das Isolations-/Reflexionselement (2) eine EMV-Schicht aufweist, die derart ausgestattet ist, elektromagnetische Strahlung zumindest teilweise zu absorbieren.

10. Heizsystem (18) nach einem der Ansprüche 1 und 3 bis 9 oder Kit nach einem der Ansprüche 2 bis 9, wobei das Heizelement (4) derart über das Abstandselement (3) an die Wand (1) anbringbar ist, dass die vom Heizelement (4) erzeugbare IR-Strahlung dem Isolations-/Reflexionselement (2) zugewandt erzeugbar ist oder erzeugt wird.

11. Heizsystem (18) nach einem der Ansprüche 1 und 3 bis 10 oder Kit nach einem der Ansprüche 2 bis 10, das ferner ein Steuerungselement (22) aufweist, wobei das Steuerungselement (22) vorzugsweise eine Abschaltautomatik, einen Thermostat (20) und/oder einen Temperatursensor (21) aufweist.

12. Verwendung eines Heizsystems (18) nach einem der Ansprüche 1 und 3 bis 11 zum Beheizen eines Raumes oder zum Abschirmen des Raumes vor elektromagnetischer Strahlung.

13. Verwendung eines Kits nach einem der Ansprüche 2 bis 11 zur Herstellung eines Heizsystems (18) an einer Wand (1).

14. Verfahren zur Herstellung eines Heizsystems (18) an einer Wand (1), umfassend die Schritte:
(a) Anbringen eines Isolations-/Reflexionselements (2) an einer Wand (1) eines Raumes, wobei das Isolations-/Reflexionselement (2) mindestens eine Isolationsschicht und mindestens eine Reflexionsschicht umfasst, wobei die Isolationsschicht diffusionsoffen ist und derart ausgestattet ist, Kältebrücken einer Wand (1) zu schließen, und die Reflexionsschicht derart ausgestattet ist, IR-Strahlung zu reflektieren,
(b) Anbringen eines Abstandselements (3) auf dem Isolations-/Reflexionselement (2) und
(c) Anbringen eines Heizelements (4), das zur Erzeugung von IR-Strahlung ausgestattet ist, an dem Abstandselement (3), so dass die vom Heizelement (4) erzeugbare IR-Strahlung dem Isolations-/Reflexionselement (2) zugewandt erzeugbar ist oder erzeugt wird.

15. Verfahren zum Beheizen eines Raumes, umfassend die Schritte:
(a) Anbringen eines Isolations-/Reflexionselements (2) an einer Wand (1) des Raumes, wobei das Isolations-/Reflexionselement (2) mindestens eine Isolationsschicht und mindestens eine Reflexionsschicht umfasst, wobei die Isolationsschicht diffusionsoffen ist und derart ausgestattet ist, Kältebrücken einer Wand (1) zu schließen, und die Reflexionsschicht derart ausgestattet ist, IR-Strahlung zu reflektieren,
(b) Anbringen eines Abstandselements (3) auf dem Isolations-/Reflexionselement (2),
(c) Anbringen eines Heizelements (4), das zur Erzeugung von IR-Strahlung ausgestattet ist, an dem Abstandselement (3), so dass die vom Heizelement (4) erzeugbare IR-Strahlung dem Isolations-/Reflexionselement (2) zugewandt erzeugbar ist oder erzeugt wird, und
(d) Betreiben des Heizelements (4).

## Claims

1. A heating system (18) for heating a room, comprising
(i) an insulation/reflection element (2) which can be attached or is attached to a wall (1) of the room and which comprises at least one insulation layer and at least one reflection layer, wherein the insulation layer is open for diffusion and is equipped in such a manner so as to close cold bridges of a wall (1), and the reflection layer is equipped in such a manner so as to reflect IR radiation;
(ii) a heating element (4) which is equipped to generate IR radiation; and
(iii) a spacer element (3) which can be arranged or is arranged between the insulation/reflection element (2) and the heating element (4) and which is configured in such a manner so as to space the heating element (4) from the insulation/reflection element (2).

2. A kit for making a heating system (18) on a wall (1), the kit comprising:
(1) an insulation/reflection element (2) which can be attached to a wall (1) of a room and which comprises at least one insulation layer and at least one reflection layer, wherein the insulation layer is open for diffusion and is equipped in such a manner so as to close cold bridges of a wall (1), and the reflection layer is equipped in such a manner so as to reflect IR radiation;
(2) a heating element (4) which is equipped to generate IR radiation; and
(3) a spacer element (3) which can be arranged between the insulation/reflection element (2) and the heating element (4) and which is configured in such a manner so as to space the heating element (4) from the insulation/reflection element (2).

3. The heating system (18) of claim 1 or the kit of claim 2, wherein the heating element (4) is an electric heating element, in particular an electric heating element which can be operated with a safety extra-low voltage, wherein the heating element (4) preferably comprises a substrate (5) which is coated with a heating layer (7) and which is optionally equipped in such a manner so as to retard fire, wherein the heating layer (7) preferably contains at least one carbon-based conductivity additive.

4. The heating system (18) or kit of claim 3, wherein the electric heating element is equipped in such a manner so as to at least partially absorb electromagnetic radiation, wherein the substrate (5) preferably has a first side coated with the heating layer (7) and a second side opposite to the first side, wherein the second side is coated with an EMC layer which is equipped in such a manner so as to at least partially absorb electromagnetic radiation, wherein the heating element (4) optionally has a grounding means which is equipped in such a manner that the heating layer (7) can be grounded when it is not supplied with electric voltage and/or current.

5. The heating system (18) or kit of claim 3 or 4, wherein the heating element (4) comprises two electrically conductive contact elements (6), which can be attached or are attached to the heating element (4) in such a manner that the heating element (4) can be supplied with electric voltage and/or current.

6. The heating system (18) or kit of claim 5, wherein the two electrically conductive contact elements (6) comprise electrically conductive metal bands, in particular made of copper.

7. The heating system (18) or kit of claim 5 or 6, wherein each of the two electrically conductive contact elements (6) has an adhesive layer.

8. The heating system (18) of one of claims 1 and 3 to 7 or the kit of one of claims 2 to 7, wherein the heating element (4) has a protection layer (8).

9. The heating system (18) of one of claims 1 and 3 to 8 or the kit of one of claims 2 to 8, wherein:
(i) the reflection layer is equipped in such a manner so as to reflect IR radiation into the room; and/or
(ii) the insulation layer has a multilayer structure and has at least one air insulation layer; and/or
(iii) the insulation/reflection element (2) has an EMC layer which is equipped in such a manner so as to at least partially absorb electromagnetic radiation.

10. The heating system (18) of one of claims 1 and 3 to 9 or the kit of one of claims 2 to 9, wherein the heating element (4) can be attached to a wall (1) via the spacer element (3) in such a manner that the IR radiation which can be generated by the heating element (4) can be generated or is generated in such a manner so as to face the insulation/reflection element (2).

11. The heating system (18) of one of claims 1 and 3 to 10 or the kit of one of claims 2 to 10, further having a control element (22), wherein the control element (22) preferably has an automatic switch-off, a thermostat (20), and/or a temperature sensor (21).

12. Use of a heating system (18) of one of claims 1 and 3 to 11 for heating a room or for shielding the room from electromagnetic radiation.

13. Use of a kit of one of claims 2 to 11 for making a heating system (18) on a wall (1).

14. A method for making a heating system (18) on a wall (1), comprising the steps:
(a) attaching an insulation/reflection element (2) to a wall (1) of a room, wherein the insulation/reflection element (2) comprises at least one insulation layer and at least one reflection layer, wherein the insulation layer is open for diffusion and is equipped in such a manner so as to close cold bridges of a wall (1), and the reflection layer is equipped in such a manner so as to reflect IR radiation;
(b) attaching a spacer element (3) on the insulation/reflection element (2); and
(c) attaching a heating element (4) which is equipped to generate IR radiation to the spacer element (3) in such a manner that the IR radiation which can be generated by the heating element (4) can be generated or is generated in such a manner so as to face the insulation/reflection element (2).

15. A method for heating a room, comprising the steps:
(a) attaching an insulation/reflection element (2) to a wall (1) of the room, wherein the insulation/reflection element (2) comprises at least one insulation layer and at least one reflection layer, wherein the insulation layer is open for diffusion and is equipped in such a manner so as to close cold bridges of a wall (1), and the reflection layer is equipped in such a manner so as to reflect IR radiation;
(b) attaching a spacer element (3) on the insulation/reflection element (2);
(c) attaching a heating element (4) which is equipped to generate IR radiation to the spacer element (3) in such a manner that the IR radiation which can be generated by the heating element (4) can be generated or is generated in such a manner so as to face the insulation/reflection element (2); and
(d) operating the heating element (4).

## Revendications

1. Système de chauffage (18) destiné à chauffer un local, comprenant
(i) un élément isolant/réfléchissant (2), qui peut être installé ou qui est installé sur un mur (1) du local et comporte au moins une couche isolante et au moins une couche réfléchissante, la couche isolante étant ouverte à la diffusion et équipée de manière à fermer les ponts thermiques d'un mur (1), et la couche réfléchissante étant équipée de manière à réfléchir un rayonnement IR,
(ii) un élément chauffant (4), qui est équipé pour générer un rayonnement IR, et
(iii) un élément d'espacement (3), qui peut être disposé ou est disposé entre l'élément isolant/réfléchissant (2) et l'élément chauffant (4) et étant configuré de manière à espacer l'élément chauffant (4) de l'élément isolant/réfléchissant (2).

2. Kit de fabrication d'un système de chauffage (18) sur un mur (1), le kit comprenant :
(1) un élément isolant/réfléchissant (2), qui peut être installé sur un mur (1) d'un local et comporte au moins une couche isolante et au moins une couche réfléchissante, la couche isolante étant ouverte à la diffusion et équipée de manière à fermer les ponts thermiques d'un mur (1), et la couche réfléchissante étant équipée de manière à réfléchir un rayonnement IR,
(2) un élément chauffant (4), qui est équipé pour générer un rayonnement IR, et
(3) un élément d'espacement (3), qui peut être disposé entre l'élément isolant/réfléchissant (2) et l'élément chauffant (4) et étant configuré de manière à espacer l'élément chauffant (4) de l'élément isolant/réfléchissant (2).

3. Système de chauffage (18) selon la revendication 1 ou kit selon la revendication 2, dans lequel l'élément chauffant (4) est un élément chauffant électrique, notamment un élément chauffant électrique qui peut fonctionner avec une basse tension de sécurité, l'élément chauffant (4) comportant de préférence un substrat (5) qui est enduit d'une couche chauffante (7) et qui est éventuellement ignifugé, la couche chauffante (7) contenant de préférence au moins un additif de conductivité à base de carbone.

4. Système de chauffage (18) ou kit selon la revendication 3, dans lequel l'élément chauffant électrique est équipé de manière à absorber au moins partiellement un rayonnement électromagnétique, le substrat (5) possédant de préférence un premier côté, qui est enduit de la couche chauffante (7), et d'un deuxième côté, qui se trouve à l'opposé du premier côté le deuxième côté étant enduit d'une couche de CEM qui est équipée de manière à absorber au moins partiellement le rayonnement électromagnétique, l'élément chauffant (4) possédant éventuellement un moyen de mise à la terre qui est équipé de telle sorte que la couche chauffante (7), lorsque celle-ci n'est pas alimentée avec une tension électrique et/ou un courant électrique, peut être reliée à la terre.

5. Système de chauffage (18) ou kit selon la revendication 3 ou 4, dans lequel l'élément chauffant (4) comporte deux éléments de contact (6) électriquement conducteurs, qui sont disposés ou peuvent être disposés sur l'élément chauffant (4) de telle sorte que l'élément chauffant (4) peut être alimenté avec une tension électrique et/ou un courant électrique.

6. Système de chauffage (18) ou kit selon la revendication 5, dans lequel les deux éléments de contact (6) électriquement conducteurs comportent des bandes métalliques électriquement conductrices, notamment en cuivre.

7. Système de chauffage (18) ou kit selon la revendication 5 ou 6, dans lequel chacun des deux éléments de contact (6) électriquement conducteurs possède une couche adhésive.

8. Système de chauffage (18) selon l'une des revendications 1 et 3 à 7 ou kit selon l'une des revendications 2 à 7, dans lequel l'élément chauffant (4) possède une couche de protection (8).

9. Système de chauffage (18) selon l'une des revendications 1 et 3 à 8 ou kit selon l'une des revendications 2 à 8, dans lequel :
(i) la couche réfléchissante est équipée de manière à réfléchir un rayonnement IR dans le local ; et/ou
(ii) la couche isolante est de structure multicouche et possède au moins une couche d'isolation à l'air ; et/ou
(iii) l'élément isolant/réfléchissant (2) possède une couche de CEM qui est équipée de manière à absorber au moins partiellement le rayonnement électromagnétique.

10. Système de chauffage (18) selon l'une des revendications 1 et 3 à 9 ou kit selon l'une des revendications 2 à 9, dans lequel l'élément chauffant (4) peut être installé sur le mur (1) par le biais de l'élément d'espacement (3) de telle sorte que le rayonnement IR pouvant être généré par l'élément chauffant (4) peut être généré ou est généré face à l'élément isolant/réfléchissant (2).

11. Système de chauffage (18) selon l'une des revendications 1 et 3 à 10 ou kit selon l'une des revendications 2 à 10, comportant en outre un élément de commande (22), l'élément de commande (22) possédant de préférence un dispositif de mise hors circuit automatique, un thermostat (20) et/ou une sonde de température (21).

12. Utilisation d'un système de chauffage (18) selon l'une des revendications 1 et 3 à 11 pour chauffer un local ou pour blinder un local contre le rayonnement électromagnétique.

13. Utilisation d'un kit selon l'une des revendications 2 à 11 pour fabriquer un système de chauffage (18) sur un mur (1).

14. Procédé de fabrication d'un système de chauffage (18) sur un mur (1), comprenant les étapes suivantes :
(a) installation d'un élément isolant/réfléchissant (2) sur un mur (1) d'un local, l'élément isolant/réfléchissant (2) comportant au moins une couche isolante et au moins une couche réfléchissante, la couche isolante étant ouverte à la diffusion et équipée de manière à fermer les ponts thermiques d'un mur (1), et la couche réfléchissante étant équipée de manière à réfléchir un rayonnement IR,
(b) installation d'un élément d'espacement (3) sur l'élément isolant/réfléchissant (2) et
(c) installation d'un élément chauffant (4), qui est équipé pour générer un rayonnement IR, sur l'élément d'espacement (3), de sorte que le rayonnement IR pouvant être généré par l'élément chauffant (4) peut être généré ou est généré face à l'élément isolant/réfléchissant (2).

15. Procédé pour chauffer un local, comprenant les étapes suivantes :
(a) installation d'un élément isolant/réfléchissant (2) sur un mur (1) du local, l'élément isolant/réfléchissant (2) comportant au moins une couche isolante et au moins une couche réfléchissante, la couche isolante étant ouverte à la diffusion et équipée de manière à fermer les ponts thermiques d'un mur (1), et la couche réfléchissante étant équipée de manière à réfléchir un rayonnement IR,
(b) installation d'un élément d'espacement (3) sur l'élément isolant/réfléchissant (2),
(c) installation d'un élément chauffant (4), qui est équipé pour générer un rayonnement IR, sur l'élément d'espacement (3), de sorte que le rayonnement IR pouvant être généré par l'élément chauffant (4) peut être généré ou est généré face à l'élément isolant/réfléchissant (2), et
(d) fonctionnement de l'élément chauffant (4).
